# EUROPÄISCHE PATENTSCHRIFT

(11) **EP 4 223 102 B1**
(45) Veröffentlichungstag und Bekanntmachung des Hinweises auf die Patenterteilung: **05.06.2024**
(21) Anmeldenummer: 23020063.6
(22) Anmeldetag: 02.02.2023
(51) Int. Cl.: A01D 45/26

(54) **ERNTEMASCHINE FÜR KOHLKOPF-GEMÜSE, UND VERFAHREN ZUM ERNTEN VON KOHLKOPF-GEMÜSE**
HARVESTING MACHINE FOR CABBAGE VEGETABLES, AND METHOD FOR HARVESTING CABBAGE VEGETABLES
RÉCOLTEUSE DE CHOUX ET PROCÉDÉ DE RÉCOLTE DES CHOUX

(30) Priorität: 05.02.2022 DE 102022102727
(43) Veröffentlichungstag der Anmeldung: 09.08.2023
(73) Patentinhaber: Türks, Karl-Wilhelm, 41352 Korschenbroich (DE)
(72) Erfinder: Türks, Karl-Wilhelm, 41352 Korschenbroich (DE)
(74) Vertreter: Dammertz, Ulrich

(56) Entgegenhaltungen:
- DE-A1- 2 707 261
- US-A- 3 858 660

## Beschreibung

Die Erfindung betrifft eine Erntemaschine für Kohlkopf-Gemüse nach dem Oberbegriff von Anspruch 1 bzw. 10 und ein Verfahren zum Ernten von Kohlkopf-Gemüse nach dem Oberbegriff von Anspruch 14.

Nach dem Stand der Technik sind Erntemaschinen für Gemüseköpfe bzw. Kohlkopf-Gemüse bekannt, beispielsweise aus DE 27 07 261 A1 oder DE 693 05 296 T2. Bei diesen Erntemaschinen ist entlang von deren Längsrichtung eine Förderstrecke vorgesehen, die aus einem Paar Förderschnecken bzw. Schneckenförderern gebildet wird. Am vorderen Ende der Förderstrecke, d.h. in Fahrtrichtung der Erntemaschine an deren Einlauf, si's nd die gegenüberliegend angeordneten Förderschnecken jeweils nach außen gespreizt angeordnet, um im Fahrtbetrieb der Erntemaschine einen Einlauf eines Kohlkopfs bzw. dessen Aufnahme durch die beiden Förderschnecken zu optimieren. Dennoch kann im Betrieb dieser Erntemaschinen das Problem auftreten, dass ein Kohlkopf nicht stabil von den gegenüberliegenden Förderschnecken aufgenommen wird und dadurch nicht zentrisch auf der Förderstrecke in Richtung nach hinten abgefördert wird.

Bei der Erntemaschine gemäß DE 27 07 261 A1 ist zum Entfernen des Strunks eines Kohlkopf-Gemüses vorgesehen, dass zwei versetzt angeordnete Kreissägen vorgesehen sind, die schräg von unten her in den Spalt zwischen den beiden Förderschnecken eingreifen und in ihrer gegenseitigen Schräglage derart angeordnet sind, dass sie ein keilförmiges Teil aus einem Kohlkopf, der von oben her auf der Förderstrecke bzw. auf den beiden Förderschnecken aufliegt, heraussägen. Zusätzlich zu diesen schräg angeordneten Kreissägen ist ein weiteres Schneidelement in Form einer um eine vertikale Drehachse rotierenden Kreissäge angeordnet, nämlich - in der Förderrichtung des Kohles gesehen - hinter bzw. stromabwärts der schräg angeordneten Kreissägen. Hierbei kann der Nachteil auftreten, dass das keilförmige Teil, welches von den beiden schräg positionierten Kreissägen aus dem Kohlkopf herausgesägt wird, beispielsweise nicht vollständig den Strunk oder daran angrenzende Abschnitte des Kohlkopfs entfernen konnte und somit nicht den Qualitätsanforderungen für eine anschließende industrielle Verarbeitung genügt wird, was eine aufwändige Nachbearbeitung erforderlich macht.

Aus US 3 858 660 A ist eine gattungsgemäße Erntemaschine mit den Merkmalen nach dem Oberbegriff von Anspruch 1 bekannt.

Entsprechend liegt der Erfindung die Aufgabe zugrunde, bei einer Erntemaschine eine Bearbeitung des geernteten Kohlkopf-Gemüses insbesondere zum Entfernen des Strunks für eine anschließende weitere Verwendung zu optimieren.

Die obige Aufgabe wird durch eine Vorrichtung mit den Merkmalen von Anspruch 1 und 10 als auch durch ein Verfahren mit den Merkmalen von Anspruch 14 gelöst. Vorteilhafte Weiterbildungen der Erfindung sind in den abhängigen Ansprüchen definiert.

Eine Erntemaschine nach der vorliegenden Erfindung dient zum Ernten von Kohlkopf-Gemüse, und umfasst eine Rahmeneinrichtung und eine an der Rahmeneinrichtung vorgesehene und sich in Fahrtrichtung der Erntemaschine erstreckende Fördereinrichtung, wobei die Fördereinrichtung ein Aufnahmesegment zum Aufnehmen von Kohlkopf-Gemüse aus einer landwirtschaftlichen Nutzfläche und ein Fördersegment zum Transportieren des aufgenommenen Kohlkopf-Gemüses in einer Förderrichtung zu einem hinteren Bereich der Erntemaschine aufweist. Unterhalb der Fördereinrichtung und insbesondere im hinteren Bereich der Erntemaschine ist eine Schneideinrichtung angeordnet, die einen um eine waagerecht und quer zur Fahrtrichtung der Erntemaschine verlaufende Achse antreibbaren Nabenkörper umfasst, an dem zumindest eine angebrachte Klinge vorgesehen ist. Bei einer Drehung des Nabenkörpers um die waagerechte Achse kann die Klinge von unten her mit einem vorzugsweise mittigen Bereich eines auf der Fördereinrichtung aufliegenden Kohlkopf-Gemüses in Kontakt gebracht werden, so dass dadurch der Strunk des Kohlkopf-Gemüses und/oder angrenzende Bereiche davon aus dem Kohlkopf-Gemüse herausgeschnitten werden. Mithilfe einer solchen Schneideinrichtung wird vorteilhaft erreicht, dass ein jeweiliger Strunk und ggf. auch angrenzende Bereiche hiervon der geernteten Kohlköpfe direkt auf der Erntemaschine vollständig entfernt werden, so dass beispielsweise eine Weiterverarbeitung der geernteten Kohlköpfe in einer Fabrik mit weniger Aufwand und somit kostengünstiger möglich ist.

Gemäß einer vorteilhaften Weiterbildung der zuletzt genannten Ausführungsform der Erntemaschine ist vorgesehen, dass die Fördereinrichtung ein Paar Haupt-Förderschnecken umfasst, die drehbar gelagert und um ihre Längsachse antreibbar sind Hierbei sind die Haupt-Förderschnecken zumindest in dem Aufnahmesegment angeordnet und weisen dort jeweils ein vorderes freies Ende auf, das sich in Fahrtrichtung der Erntemaschine erstreckt. Des Weiteren umfasst die Fördereinrichtung ein Paar drehbar gelagerte Zusatz-Förderschnecken, die in dem Aufnahmesegment der Fördereinrichtung jeweils parallel zu den Haupt-Förderschnecken angeordnet und um ihre Längsachse antreibbar sind. Durch dieses Paar Zusatz-Förderschnecken ergibt sich der Vorteil, dass damit die Aufnahme von Kohlkopf-Gemüse aus bzw. von einer landwirtschaftlichen Nutzfläche im Fahrtbetrieb der Erntemaschine optimiert wird, derart, dass dabei die aufgenommenen Kohlköpfe in einer räumlich stabilisierten Position auf die Fördereinrichtung gelangen und somit ohne die Gefahr eines "seitlichen Wegkullerns" oder dergleichen auf den Haupt-Förderschnecken in Richtung eines hinteren Bereichs der Erntemaschine transportiert werden können.

Gemäß einer vorteilhaften Weiterbildung der Erfindung ist vorgesehen, dass die Zusatz-Förderschnecken und die Haupt-Förderschnecken jeweils mit gleicher Drehzahl angetrieben werden können. Hierdurch wird erreicht, dass auf einen Kohlkopf, der durch diese Förderschnecken von einer landwirtschaftlichen Nutzfläche aufgenommen wird, ein gleichmäßiger Drehimpuls in Richtung einer Mitte der durch die Fördereinrichtung ausgebildeten Förderstrecke ausgeübt wird, was zu einer weiteren Stabilisierung der räumlichen Position eines Kohlkopfs auf bzw. zwischen den jeweils gegenüberliegenden Förderschnecken führt.

Im Sinne der vorliegenden Erfindung ist unter dem Merkmal einer "Stabilisierung der räumlichen Position", mit der sich ein geernteter Kohlkopf auf den Haupt-Förderschnecken insbesondere im Aufnahmesegment der Fördereinrichtung befindet, zu verstehen, dass dabei der Kohlkopf auf den Haupt-Förderschnecken aufliegt und bei einer Drehung der Haupt-Förderschnecken um ihre Längsachse in der Förderrichtung (d.h. entgegen der Fahrtrichtung der Erntemaschine) transportiert wird, derart liegen bleibt, dass der Strunk des Kohlkopfs gleichbleibend und permanent nach unten weist. Dies ist von Bedeutung für eine Bearbeitung durch den um die waagerechte Achse rotierenden Nabenkörper der Schneideinrichtung und die daran vorgesehene Klinge, die wie erläutert vorzugsweise im hinteren Bereich der Erntemaschine angeordnet ist.

In vorteilhafter Weiterbildung der Erfindung ist vorgesehen, dass die Zusatz-Förderschnecken jeweils oberhalb der daran angrenzenden Haupt-Förderschnecken angeordnet sind. Hierdurch wird im Aufnahmesegment eine seitliche Führung eines Kohlkopfs zwischen den Haupt-Förderschnecken errreicht und ein seitliches "Wegkullern" eines bereits aus der landschaftlichen Nutzfläche herausgezogenen Kohlkopfs über die Haupt-Förderschnecken hinweg ,s verhindert.

In vorteilhafter Weiterbildung der Erfindung ist in Bezug auf die beiden Zusatz-Förderschnecken vorgesehen, dass deren Abstand relativ zueinander größer ist als ein Abstand der beiden Haupt-Förderschnecken, so dass damit eine Zusatz-Förderschnecke jeweils schräg oberhalb von einer daran angrenzenden Haupt-Förderschnecke angeordnet ist. Hiermit wird eine schonende Führung eines bereits aus der landschaftlichen Nutzfläche herausgezogenen bzw. geernteten Kohlkopfs auf bzw. entlang der rotierenden Haupt-Förderschnecken erreicht und ein übermäßiges und somit nachteiliges seitliches Quetschen des Kohlkopfs vermieden.

In vorteilhafter Weiterbildung der Erfindung kann vorgesehen sein, dass die vorderen Enden der Zusatz-Förderschnecken - in Fahrtrichtung der Erntemaschine gesehen - hinter den vorderen freien Enden der Haupt-Förderschnecken positioniert sind. Hierdurch wird erreicht, dass ein Kohlkopf aus der landwirtschaftlichen Nutzfläche zunächst nur durch die vorderen freien Enden der Haupt-Förderschnecken aufgenommen wird und im Anschluss daran eine seitliche Stabilisierung des aufgenommenen Kohlkopfs durch die beiden Zusatz-Förderschnecken erfolgt.

Zur Anpassung an den Verlauf einer landwirtschaftlichen Nutzfläche kann gemäß einer vorteilhaften Weiterbildung der erfindungsgemäßen Erntemaschine vorgesehen sein, dass die Haupt-Schnecken und die Zusatz-Schnecken zusammen an einem Führungselement angebracht sind, das an einem vorderen Ende der Rahmeneinrichtung gelenkig angebracht und um eine Drehachse, die waagerecht und quer zur Fahrtrichtung der Erntemaschine verläuft, verschwenkt werden kann. In dieser Weise ist es möglich, eine Neigung der Schnecken relativ zu der darunter befindlichen landwirtschaftlichen Nutzfläche gemeinsam zu verstellen und somit einen möglichst geringen und gleichmäßigen Abstand insbesondere der Haupt-Förderschnecken relativ zum Untergrund zu erreichen bzw. beizubehalten.

In vorteilhafter Weiterbildung der Erfindung können an dem Nabenkörper entlang von dessen Außenumfangsfläche mehrere Armelemente vorgesehen sein, die jeweils radial von dem Nabenkörper abragen und insbesondere jeweils gleich lang ausgebildet sind. An den freien Enden dieser Armelemente ist jeweils eine Klinge angebracht. Bei einer Rotation des Nabenkörpers um seine waagerechte Drehachse gelangen dann die Klingen in Kontakt bzw. Eingriff mit einem auf der Fördereinrichtung befindlichen Kohlkopf, um wie erläutert den Strunk und ggf. angrenzende Bereiche hiervon aus dem Kohlkopf herauszuschneiden.

In vorteilhafter Weiterbildung der Erfindung sind auf dem zentrischen Nabenkörper zwei Ringelemente (d.h. ein erstes und ein zweites Ringelement) angebracht, wobei zumindest eines dieser Ringelemente entlang der waagerechten Achse verschieblich gelagert ist. Das verschiebliche Ringelement ist an seiner Innenumfangsfläche derart ausgebildet, dass es an zumindest einer Stelle eine Außenumfangsfläche des Nabenkörpers formschlüssig kontaktiert und dadurch drehfest mit dem Nabenkörper verbunden ist. An der Außenumfangsfläche jedes dieser Ringelemente sind vorzugsweise eine Mehrzahl von Armelementen mit daran befestigten Klingen angebracht, so dass bei einer Rotation des Nabenkörpers um die waagerechte Achse dann diese Klingen in Schneidkontakt mit einem Kohlkopf gelangen, der oben her auf der Fördereinrichtung und deren Haupt-Förderschnecken aufliegt.

Durch die Verstellbarkeit von zumindest einem Ringelement entlang der waagerechten Achse relativ zu dem anderen Ringelement wird vorteilhaft ermöglicht, den Abstand der beiden Ringelemente auf dem Nabenkörper relativ zueinander veränderlich einzustellen. Hierdurch wird dann in gleicher Weise erreicht, dass ein Abstand der Klingen, die jeweils an den freien Enden der Armelemente angebracht sind, ebenfalls verändert wird. Durch einen Abstand dieser Klingen zueinander wird eine resultierende Arbeitsweite definiert, mit der die Klingen der Armelemente gemeinsam auf einen auf der Fördereinrichtung aufliegenden Kohlkopf einwirken und wie erläutert den Strunk oder ggf. angrenzende Bereiche hierzu aus dem Kohlkopf herausschneiden.

Eine erfindungsgemäße Erntemaschine gemäß einer weiteren Ausführungsform, der eine eigenständige Bedeutung zukommt und die ebenfalls zum Ernten von Kohlkopf-Gemüse dient, umfasst eine Rahmeneinrichtung, eine an der Rahmeneinrichtung vorgesehene und sich in Fahrtrichtung der Erntemaschine erstreckende Fördereinrichtung, wobei die Fördereinrichung ein Aufnahmesegment zum Aufnehmen von Kohlkopf-Gemüse aus einer landwirtschaftlichen Nutzfläche und ein Fördersegment zum Transportieren des aufgenommenen Kohlkopf-Gemüses in einer Förderrichtung zu einem hinteren Bereich der Erntemaschine aufweist, wobei die Fördereinrichtung Haupt-Förderschnecken aufweist, die in dem Fördersegment parallel zueinander verlaufen. Diese Erntemaschine umfasst des Weiteren ein unterhalb der Fördereinrichtung angeordnetes Schneidelement, das auf ein auf der Fördereinrichtung aufliegendes Kohlkopf-Gemüse einwirkt, und mindestens zwei versetzt angeordnete Kreissägen, die schräg von unten her in den Spalt zwischen die beiden Haupt-Förderschnecken eingreifen und in ihrer gegenseitigen Schräglage derart angeordnet sind, dass sie ein keilförmiges Teil aus einem Kohlkopf-Gemüse, das von oben her auf der Fördereinrichtung und deren beiden Haupt-Förderschnecken aufliegt, mitsamt dem Strunk heraussägen. Für diese Erntemaschine ist charakteristisch, dass das Schneidelement - in der Förderrichtung gesehen - zu Beginn des Fördersegments und vor bzw. stromaufwärts der beiden versetzt angeordneten und schräg von unten her in den Spalt zwischen den beiden Haupt-Förderschnecken eingreifenden Kreissägen angeordnet ist und dabei auf ein auf der Fördereinrichtung aufliegendes Kohlkopf-Gemüses einwirkt, derart, dass dadurch der Strunk des Kohlkopf-Gemüses quer zu seiner Achse zumindest teilweise abgeschnitten und/oder an dem Kohlkopf-Gemüse anhaftende Verschmutzungen entfernt werden.

Der zuletzt genannten Ausführungsform der erfindungsgemäßen Erntemaschine liegt die wesentliche Erkenntnis zugrunde, dass mit dem Schneidvorgang, der an dem Kohlkopf-Gemüse mittels des Schneidelements erfolgt, vorzugsweise am Anfang der Förderstrecke bzw. der zugehörigen Förderrichtung eine vorbereitende Schnitt-Bearbeitung des Kohlkopfs erfolgt, bevor dann an dem Kohlkopf ein weiterer Schneidvorgang durchgeführt wird, beispielsweise mittels der beiden schräg gestellten Kreissägen, mit denen von unten her ein keilförmiges Teil aus dem Kohlkopf-Gemüse herausgeschnitten wird.

Gemäß einer vorteilhaften Weiterbildung der zuletzt genannten Ausführungsform kann vorgesehen sein, dass die beiden versetzt angeordneten Kreissägen in einem mittigen Bereich des Fördersegments der Fördereinrichtung angeordnet sind.

Die vorliegende Erfindung sieht ebenfalls ein Verfahren zum Ernten von Kohlkopf-Gemüse vor. Bei diesem Verfahren wird Kohlkopf-Gemüse aus einer landwirtschaftlichen Nutzfläche herausgezogen und anschließend auf einer sich in einer Förderrichtung bewegenden Fördereinrichtung transportiert. Falls sich ein Kohlkopf-Gemüse nach dem Herausziehen aus der landwirtschaftlichen Nutzfläche auf der Fördereinrichtung befindet, wird an zumindest zwei verschiedenen Stellen entlang der Förderrichtung jeweils ein Schneidvorgang durchgeführt wird, um den Strunk zumindest teilweise, vorzugsweise vollständig aus dem Kohlkopf-Gemüse herauszuschneiden und/oder an dem Kohlkopf-Gemüse anhaftende Verschmutzungen zu entfernen. An dem auf der Fördereinrichtung transportierten Kohlkopf-Gemüse entlang der Förderrichtung werden an drei verschiedenen Stellen aufeinanderfolgend unterschiedliche Schneidvorgänge durchgeführt, nämlich
(i) ein erster Schneidvorgang, bei dem der Strunk des Kohlkopf-Gemüses quer zu seiner Achse zumindest teilweise abgeschnitten wird,
(ii) ein zweiter Schneidvorgang, bei dem ein keilförmiges Teil aus dem Kohlkopf-Gemüse von unten her herausgesägt wird, und
(iii) ein dritter Schneidvorgang, bei dem weitere Teile des Kohlkopf-Gemüses von unten her mit einer vorzugsweise geraden und im Wesentlichen waagerecht angeordneten Klinge herausgeschnitten werden.

Dem vorstehend genannten Verfahren liegt die wesentliche Erkenntnis zugrunde, dass mit der Vornahme von zumindest zwei Schneidvorgängen an dem Kohlkopf-Gemüse die Effizienz des zweiten Schneidvorgangs verbessern wird, weil hierfür das Kohlkopf-Gemüse bei Durchführung des ersten Schneidvorgangs vorbereitet wird. Beispielsweise wird beim ersten Schneidvorgang bereits ein großer Teil des Strunks mitsamt daran anhaftender Verschmutzungen abgeschnitten, so dann bei Durchführung des zweiten Schneidvorgangs weitere Teile des Strunks und/oder angrenzende Bereiche davon aus dem Kohlkopf-Gemüse genauer bzw. mit größerer Effizienz herausgeschnitten werden können. Weiterhin wird durch den dritten Schneidvorgang dank der hierbei eingesetzten Klinge, vorzugsweise eine Mehrzahl von solchen Klingen, und deren waagerecht angeordneten Verlauf gewährleistet, dass eventuelle Restteile des Strunks und/oder angrenzende Bereiche davon vollständig aus einem Kohlkopf herausgeschnitten werden.

In vorteilhafter Weiterbildung der Erfindung ist an zumindest einer Seite der Fördereinrichtung, vorzugsweise an beiden Seiten der Fördereinrichtung, zumindest eine Reinigungseinrichtung vorgesehen ist, die eine um eine im Wesentlichen senkrecht verlaufende Achse angetriebene Nabe mit zumindest einem flexiblen Abstreifelement umfasst, wobei beim Antrieb der Nabe um ihre Achse das flexible Abstreifelement in Kontakt mit der Fördereinrichtung und darauf aufliegendem Kohlkopf-Gemüse bringbar ist, vorzugsweise, dass die Reinigungseinrichtung - in Fahrtrichtung der Erntemaschine gesehen - hinter dem Aufnahmesegment der Fördereinrichtung und seitlich angrenzend zum Fördersegment angeordnet ist

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist nachfolgend anhand von bevorzugten Ausführungsformen in der Zeichnung schematisch dargestellt und wird unter Bezugnahme auf die Zeichnung ausführlich beschrieben. Es zeigen:
- Fig 1: eine vereinfachte Draufsicht auf eine Rahmeneinrichtung einer erfindungsgemäßen Erntemaschine und einer daran angebrachten Fördereinrichtung gemäß einer ersten Ausführungsform
- Fig. 2: eine Ansicht von vorne auf ein Aufnahmesegment der Fördereinrichtung der Erntemaschine von Fig. 1,
- Fig. 3: eine Seitenansicht eines Aufnahmesegments der Erntemaschine von Fig. 1,
- Fig. 4: eine vereinfachte Draufsicht auf eine Rahmeneinrichtung einer erfindungsgemäßen Erntemaschine und einer daran angebrachten Fördereinrichtung gemäß einer zweiten Ausführungsform,
- Fig. 5: eine vergrößerte Ansicht eines Schneidelements, das an der Rahmeneinrichtung der Ausführungsform von Fig. 1 und Fig. 4 angrenzend zur Fördereinrichtung angebracht ist,
- Fig. 6: eine Querschnittsansicht der Rahmeneinrichtung von Fig. 4 senkrecht zur Förderrichtung, nämlich zur Veranschaulichung von weiteren Kreissägen, die angrenzend zur Fördereinrichtung vorgesehen sind,
- Fig. 7-10: jeweils Ansichten von Bauteilen, die Bestandteil einer Schneideinrichtung der Ausführungsform einer erfindungsgemäßen Erntemaschine gemäß der Fig. 11-18 sind,
- Fig. 11: eine Seitenansicht einer rotierbaren Schneideinrichtung, die gemäß einer weiteren Ausführungsform in einem hinteren Bereich der erfindungsgemäßen Erntemaschine von Fig. 1 oder von Fig. 4 vorgesehen sein kann,
- Fig. 12: eine Seitenansicht einer rotierbaren Schneideinrichtung, die gemäß einer weiteren Ausführungsform in einem hinteren Bereich der erfindungsgemäßen Erntemaschine von Fig. 1 oder von Fig. 4 vorgesehen sein kann,
- Fig. 13: eine Perspektivansicht einer rotierbaren Schneideinrichtung, die gemäß einer weiteren Ausführungsform in einem hinteren Bereich der erfindungsgemäßen Erntemaschine von Fig. 1 oder von Fig. 4 vorgesehen sein kann,
- Fig. 14-16: jeweils Seitenansichten von Teilen der rotierbaren Schneideinrichtung von Fig. 13,
- Fig. 17: eine Ansicht von hinten auf die Schneideinrichtung von Fig. 13,
- Fig. 18a,: 18bjeweils vereinfachte Ansichten von Teilen der Schneideinrichtung von Fig. 13 in jeweils verschiedenen Betriebspositionen,
- Fig. 19a-c: resultierende Schnittbilder für einen Kohlkopf, nachdem an ihm erfindungsgemäß zumindest ein Schneidvorgang durchgeführt worden ist,
- Fig. 20a-f: beispielhafte Verläufe von möglichen Förderrichtungen, in denen ein geernteter Kohlkopf auf einer Fördereinrichtung der erfindungsgemäßen Erntemaschine transportiert wird, und
- Fig. 21: eine Reinigungseinrichtung, die gemäß einer weiteren Ausführungsform der erfindungsgemäßen Erntemaschine an der Rahmeneinrichtung von Fig. 1 oder von Fig. 4 vorgesehen sein kann.

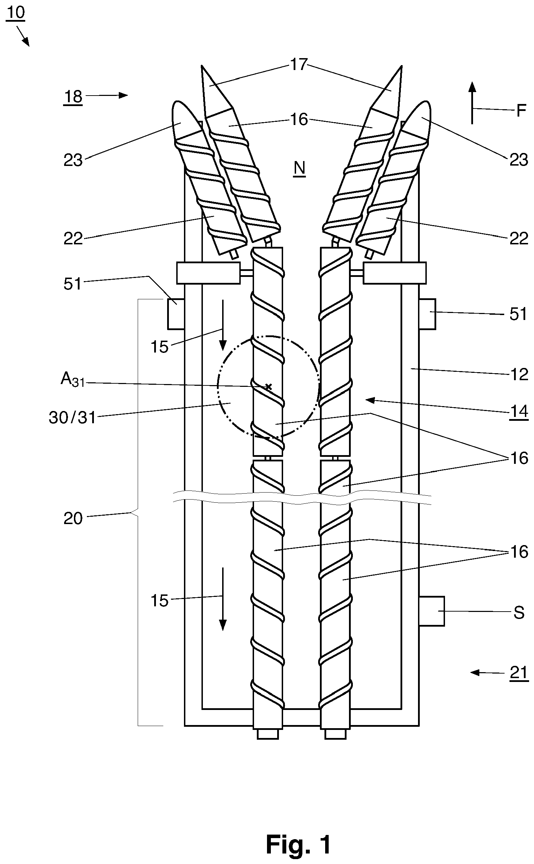

Nachstehend sind unter Bezugnahme auf die Fig. 1-21 bevorzugte Ausführungsformen einer erfindungsgemäßen Erntemaschine 10 und eines entsprechenden Verfahrens dargestellt und erläutert, mit der bzw. dem das Ernten von Kohlkopf-Gemüse aus einer landwirtschaftlichen Nutzfläche möglich ist. Gleiche Merkmale in der Zeichnung sind jeweils mit gleichen Bezugszeichen versehen. An dieser Stelle wird gesondert darauf hingewiesen, dass die Zeichnung lediglich vereinfacht und insbesondere ohne Maßstab dargestellt ist.

Fig. 1 zeigt die Erntemaschine 10 in einer Draufsicht mit einer dazugehörigen Rahmeneinrichtung 12.

Die Erntemaschine 10 kann mit einem eigenen (nicht gezeigten) Fahrwerk ausgestattet sein und/oder an einer landwirtschaftlichen Zugmaschine angehängt werden. Jedenfalls ist für die Erntemaschine 10 in deren Betrieb von Bedeutung, dass sie auf einer landwirtschaftliche Nutzfläche F in einer Fahrtrichtung bewegt wird, die in Fig. 1 mit einem Pfeil "F" symbolisiert ist.

Die Erntemaschine 10 gemäß der Ausführungsform von Fig. 1 umfasst eine Fördereinrichtung 14, die sich in der Fahrtrichtung F erstreckt und ein Paar von Haupt-Förderschnecken 16 aufweist, die drehbar gelagert und um ihre Längsachse antreibbar sind.

Mit der Fördereinrichtung 14 wird eine Förderstrecke 15 entlang der Rahmeneinrichtung 12 gebildet. Entlang dieser Förderstrecke 15 und einer entsprechenden Förderrichtung - hier ebenfalls mit "15" bezeichnet - können geerntete Kohlköpfe 1 in der Erntemaschine 10 in einen hinteren Bereich 21 davon transportiert werden.

Die Fördereinrichtung 14 hat an ihrem vorderen Ende ein Aufnahmesegment 18, in dem die Haupt-Förderschnecken 16 angeordnet sind. Diesbezüglich verdeutlicht die Draufsicht von Fig. 1, dass die Haupt-Förderschnecken 16 in diesem Aufnahmesegment 18 derart angeordnet sind, dass sie mit ihren vorderen freien Enden 17 jeweils nach außen gespreizt sind.

Des Weiteren umfasst die Fördereinrichtung 14 ein Paar drehbar gelagerte Zusatz-Förderschnecken 22, die in dem Aufnahmesegment 18 jeweils parallel zu den Haupt-Förderschnecken 16 angeordnet sind. Diese Zusatz-Förderschnecken 22 können ebenfalls um ihre Längsachse angetrieben werden, und sind mit ihren jeweiligen vorderen Enden 22 in Übereinstimmung zu den Haupt-Förderschnecken 16 ebenfalls nach außen gespreizt angeordnet.

Die Draufsicht von Fig. 1 verdeutlicht des Weiteren, dass die Haupt-Förderschnecken 16 ebenfalls in dem Fördersegment 20 angeordnet sind und dort im Wesentlichen parallel zueinander verlaufen. In diesem Fördersegment 20 können die Haupt-Förderschnecken 16 entlang einer Längserstreckung der Erntemaschine 10 bzw. deren Rahmeneinrichtung 12 jeweils mehrteilig ausgebildet sein, wobei für diesen Fall die einzelnen Teile der Haupt-Förderschnecken 16 drehfest miteinander verbunden sind.

Für den Übergang der Haupt-Förderschnecken 16 zwischen dem Aufnahmesegment 18 und dem Fördersegment 20 ist eine gelenkige Kardanverbindung vorgesehen, mit der die Drehbewegung der Haupt-Förderschnecken 16 vom Aufnahmesegment 18 in das Fördersegment 20 (oder umgekehrt, d.h. vom Fördersegment 20 in das Aufnahmesegment 18) übertragbar ist.

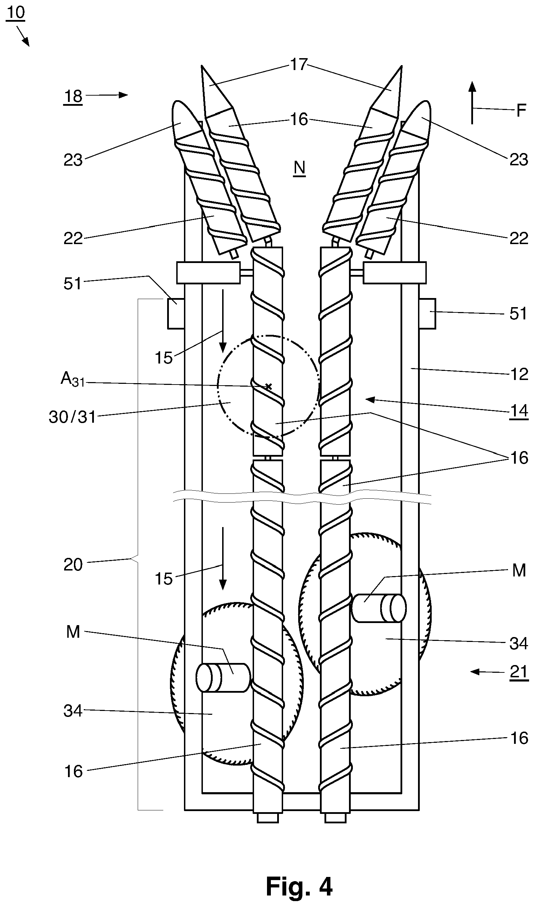

Durch die Abbruchlinien, die in der Fig. 1 in etwa in deren mittigen Bereich horizontal verlaufen, ist angedeutet, dass eine Längserstreckung der Rahmeneinrichtung 12 ggf. auch größer sein kann als dargestellt. Gleiches gilt auch für die Ausführungsform von Fig. 4, die nachstehend noch gesondert erläutert ist.

In Bezug auf den Antrieb der Haupt-Förderschnecken 16 und der Zusatz-Förderschnecken 22 um ihre jeweilige Längsachse darf an dieser Stelle darauf hingewiesen werden, dass dies erfindungsgemäß hydraulisch, d.h. unter Verwendung eines Hydraulikmotors bzw. durch den Anschluss an einen hierzu geeigneten Hydraulikkreislauf erfolgen kann. In der Zeichnung ist ein solcher Hydraulikmotor an einigen Stellen gezeigt und dort jeweils mit "M" bezeichnet.

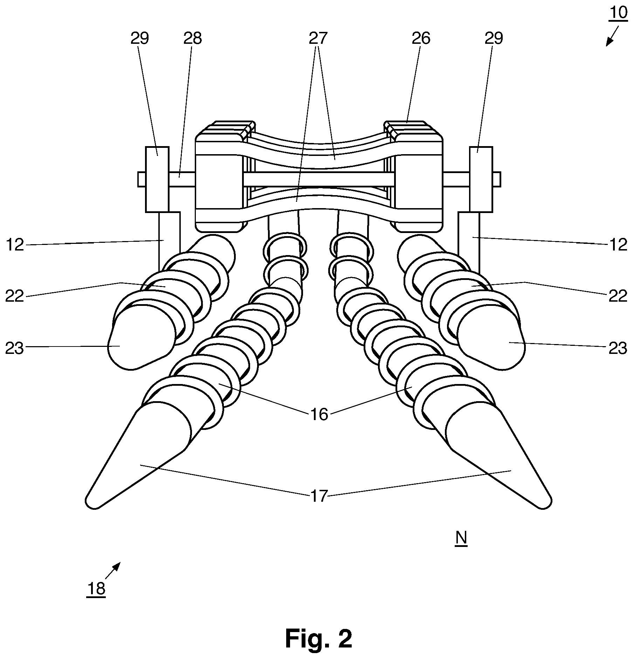

Das Aufnahmesegment 18 der Fördereinrichtung 14 ist in der Fig. 2 perspektivisch in einer Ansicht von vorne gezeigt. Hierin ist erkennbar, dass oberhalb der Fördereinrichtung 14 und deren Haupt-Förderschnecken 16 ein endloses umlaufendes Stützband 26 vorgesehen ist, das parallel zur Förderstrecke 15 (vgl. Fig. 1) verläuft und elastische Streben umfasst, die über der Breite des Stützbands 26 gesehen jeweils konvex nach innen gewölbt ausgebildet sind. Mit einer solchen Wölbung der Streben wird eine Anpassung an die Kontur eines Kohlkopfs erreicht, wenn sich das Stützband 26 bei dessen Umlauf von oben her auf den auf den Haupt-Förderschnecken 16 transportierten Kohlkopfs 1 auflegt.

Das umlaufende Stützband 26 ist angrenzend an das Aufnahmesegment 18 um eine Welle 28 herumgeführt, die seitlich in daran angrenzenden Drehlagern 29 aufgenommen ist und quer zur Fahrtrichtung F verläuft. In gleicher Weise ist das umlaufende Stützband in dem hinteren Bereich 21 der Erntemaschine 21 um eine quer zur Fahrtrichtung verlaufende Welle oder dergleichen geführt, was zur Vereinfachung nicht näher gezeigt ist.

Für das umlaufende Stützband 26 ist eine Fördergeschwindigkeit entlang der Förderstrecke 15 vorgesehen, die im Wesentlichen mit einer Transportgeschwindigkeit übereinstimmt bzw. synchronisiert ist, die für einen auf den rotierenden Haupt-Förderschnecken 16 der Fördereinrichtung 14 aufliegenden Kohlkopf erzielt wird. Mit Hilfe dieses umlaufenden Stützbandes 26 wird eine räumliche Stabilisierung von geernteten Kohlköpfen 1 erreicht, wenn diese sich auf der Fördereinrichtung 14 und der dazugehörigen Haupt-Förderschnecken 16 befinden.

Mit seiner vorstehend erläuterten Struktur erfüllt das Stützband 26 die Funktion eines Stabkettenbands und hält einen Kohlkopf 1 definiert von oben her auf der Fördereinrichtung 14 bzw. der zugehörigen Haupt-Förderschnecken 16. Dies ist insbesondere dann von Bedeutung, wenn an dem Kohlkopf 1 während seines Transports entlang der Förderrichtung 15 von unten her ein Schneidvorgang durchgeführt wird.

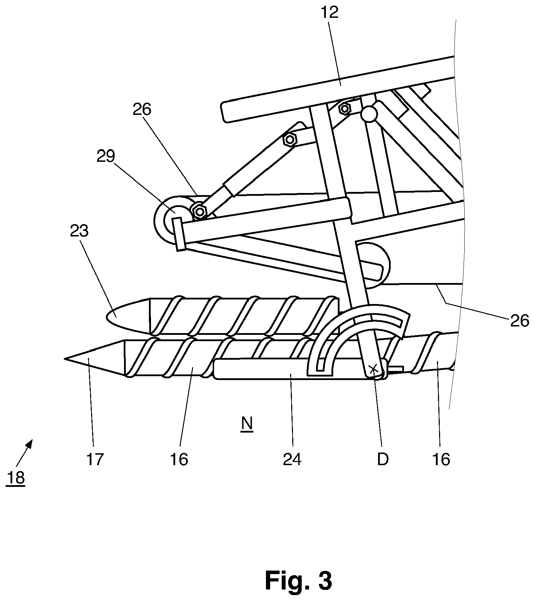

Fig. 3 zeigt eine vereinfachte Seitenansicht des Aufnahmesegments 18 der Fördereinrichtung 14. Hierin ist erkennbar, dass ein Führungselement 24 mit einem vorderen Ende der Rahmeneinrichtung 12 drehgelenkig verbunden ist, nämlich über eine Drehachse D, die quer zur Fahrtrichtung F verläuft. An diesem Führungselement 24 sind an jeder Seite der Führungseinrichtung 14 jeweils eine Haupt-Förderschnecke 16 und eine Zusatz-Förderschnecke 22 angebracht. Somit ist es mittels einer Drehung des Führungselements 24 um die Drehachse D möglich, eine Neigung der Schnecken 16, 22 relativ zu einer darunter befindlichen landwirtschaftlichen Nutzfläche N gemeinsam zu verstellen. Eine solche Drehung des Führungselements 24 um die Drehachse D kann hydraulisch oder elektromotorisch erfolgen.

In Bezug auf die Zusatz-Förderschnecken 22 wird darauf hingewiesen, dass diese jeweils oberhalb einer daran angrenzenden Haupt-Förderschnecke 16 angeordnet sind. Indem ein Abstand der beiden Zusatz-Förderschnecken 22 relativ zueinander größer ist als ein Abstand der beiden hierzu angrenzenden Haupt-Förderschnecken 16, wird erreicht, dass die Zusatz-Förderschnecken 22 jeweils schräg oberhalb von einer daran angrenzenden Haupt-Förderschnecke 16 angeordnet sind (vgl. Fig. 2).

Des Weiteren wird durch die Seitenansicht von Fig. 3 verdeutlicht, dass die vorderen Enden 23 der Zusatz-Förderschnecken 22 - in Fahrtrichtung F der Erntemaschine 10 gesehen - sich jeweils hinter einem vorderen freien Ende 17 einer zugeordneten Haupt-Förderschnecke 16 befinden.

Die Ausführungsform von Fig. 1 kann dahingehend modifiziert ausgebildet sein, dass unterhalb der Fördereinrichtung 14 und - in der Förderrichtung 15 gesehen - vorzugsweise zu Beginn des Fördersegments 20 ein Schneidelement 30 angeordnet ist. Dieses Schneidelement 30 ist in der Fig. 1 vereinfacht mit einer doppelt-strichpunktierten Linie symbolisiert.

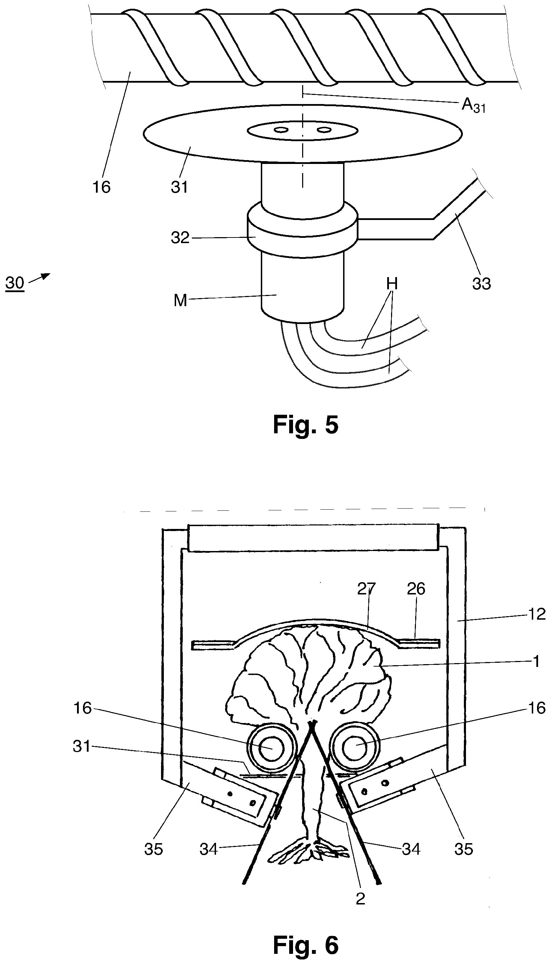

Fig. 5 zeigt das Schneidelement 30 in einer vergrößerten Perspektivansicht. Hierzu im Einzelnen folgende Erläuterungen:
Das Schneidelement 30 umfasst eine Kreissäge 31, die um eine Achse A₃₁ drehbar angetrieben ist, vorzugsweise mittels eines Hydraulik-Motors M, der durch Hydraulikschläuche an einen (nicht gezeigten) Hydraulikkreislauf angeschlossen ist. Der Motor M wird durch einen Ringflansch 32 umfasst und durch einen mit der Rahmeneinrichtung 12 verbundenen Haltearm 33 in seiner gewünschten Position fixiert.

Die Kreissäge 31 ist ausweislich der Darstellung von Fig. 5 angrenzend zu einer Haupt-Förderschnecke 16 bzw. unterhalb davon (vgl. Fig. 1) angeordnet. Die Achse A₃₁ der Kreissäge 31 verläuft hierbei im Wesentlichen senkrecht zu der Förderrichtung 15 bzw. zur Längserstreckung dieser Haupt-Förderschnecke 16.

Die Position des Motors M für die Kreissäge 31 ist derart gewählt, dass damit die Kreissäge 31 mit ihrer Achse A₃₁ unterhalb einer Haupt-Förderschnecke 16 angeordnet ist und dabei einen Durchmesser aufweist, mit dem die Kreissäge 31 den Abstand bis zu der jeweils anderen, d.h. gegenüberliegenden Haupt-Förderstrecke 16 überbrückt.

Fig. 6 zeigt eine Querschnittsansicht der Rahmeneinrichtung 12 senkrecht zur Förderrichtung, wobei hierin auch die Kreissäge 31 zu erkennen ist.

Im Betrieb der Erntemaschine 10 erfüllt das Schneidelement 30 die Funktion, dass dessen Kreissäge 31 auf einen Kohlkopf 1, der auf der Fördereinrichtung 14 bzw. auf deren Haupt-Förderschnecken 16 in der Förderrichtung 15 transportiert wird, derart einwirkt, dass dadurch der Strunk 2 des Kohlkopf-Gemüses 1 quer zu seiner Achse zumindest teilweise abgeschnitten und/oder an dem Kohlkopf-Gemüse 1 anhaftende Verschmutzungen oder dergleichen entfernt werden.

Nachstehend ist unter Bezugnahme auf die Fig. 4 eine weitere Ausführungsform der erfindungsgemäßen Erntemaschine 10 dargestellt und erläutert.

Die Draufsicht von Fig. 4 veranschaulicht, dass in dem mittigen Bereich (oder wahlweise im hinteren Bereich 21) der Erntemaschine 10 zwei versetzt angeordnete Kreissägen 34 angeordnet sind. Diese beiden Kreissägen 34 sind in einer Querschnittsansicht auch in der Fig. 6 gezeigt. Jedenfalls greifen diese beiden Kreissägen 34 schräg von unten her in den Spalt zwischen den beiden Haupt-Förderschnecken 16 ein uns sind somit in ihrer gegenseitigen Schräglage derart angeordnet, dass sie ein keilförmiges Teil aus einem Kohlkopf-Gemüse 1, das von oben her auf der Fördereinrichtung 14 bzw. auf den beiden Haupt-Förderschnecken 16 aufliegt, mitsamt dem Strunk 2 heraussägen.

Das Aufbringen einer Schneidkraft mittels der Kreissägen 34 von unten her auf den Kohlkopf 1 wird neben der Gewichtskraft eines Kohlkopfs 1 auch dadurch begünstigt, dass dieser Kohlkopf 1 von oben her durch das Stützband 26, welches wie erläutert synchronisiert zu den Haupt-Förderschnecken 16 der Fördereinrichtung 14 umläuft, niedergehalten und dadurch gegen die Haupt-Förderschnecken 16 gedrückt wird.

In Bezug auf das Schneidelement 30 wird an dieser Stelle gesondert erläutert, dass dieses auch zusammen mit den beiden schräg gestellten Kreissägen 34 vorgesehen sein kann. Dies kommt beispielsweise dadurch zum Ausdruck, dass in der Fig. 4 das Schneidelement 30 ebenfalls gezeigt ist. Diesbezüglich ist hervorzuheben, dass dann das Schneidelement 30 mit seiner Kreissäge 31, ausweislich der Darstellung gemäß Fig. 4, in der Förderrichtung 15 gesehen vor den beiden schräg gestellten Kreissägen 34 angeordnet ist. In Folge dessen wird dann an einem Kohlkopf 1, der auf der Fördereinrichtung 14 in der Förderrichtung 15 transportiert wird, zunächst ein Schneidvorgang durch das Schneidelement 30 durchgeführt, wobei erst im Anschluss hieran, wie erläutert, durch die beiden schräg gestellten Kreissägen 34 ein keilförmiger Teil von unten aus dem Kohlkopf 1 herausgesägt wird.

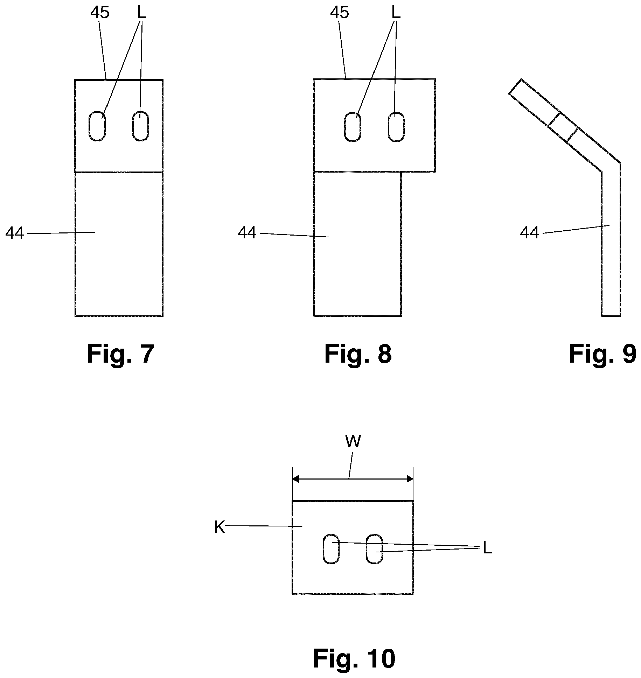

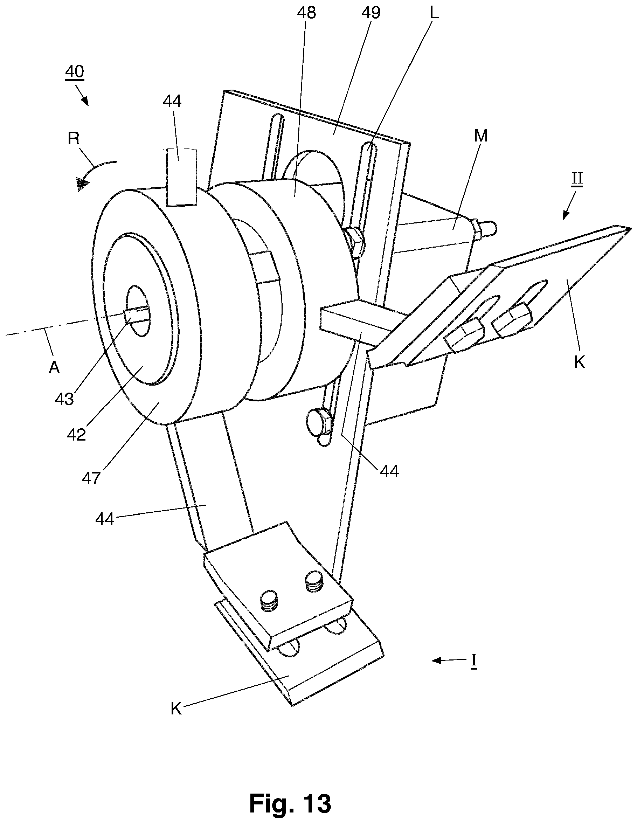

Nachstehend sind unter Bezugnahme auf die Fig. 7 - 18 weitere Ausführungsformen der erfindungsgemäßen Erntemaschine 10 dargestellt und erläutert. Bei diesen Ausführungsformen ist in dem hinteren Bereich 21 der Erntemaschine 10 und unterhalb von der Fördereinrichtung 14 eine Schneideinrichtung 40 angeordnet, die einen um eine waagerecht und quer zur Fahrtrichtung F der Erntemaschine 10 verlaufende Achse A (vgl. Fig. 13) drehbar gelagerten und um diese Achse A antreibbaren zentrischen Nabenkörper 42 umfasst, an dem zumindest eine Klinge K vorgesehen ist.

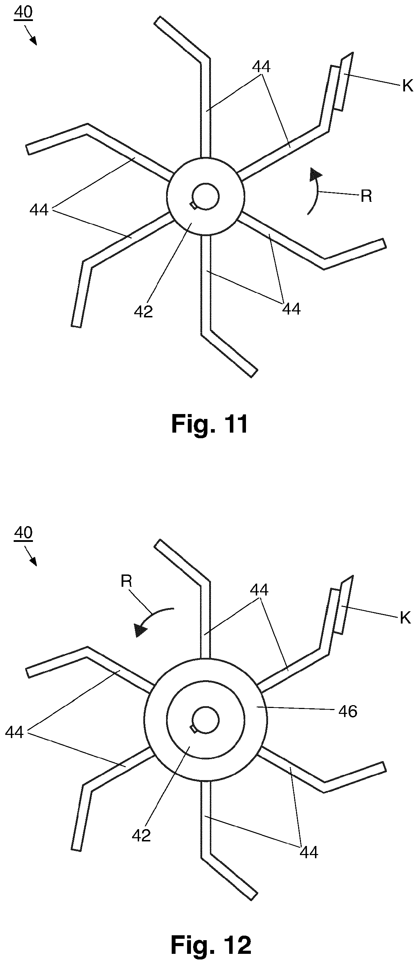

Fig. 11 zeigt vereinfacht in Seitenansicht eine Ausführungsform der Schneideinrichtung 40, bei der an einem Außenumfang des Nabenkörpers 42 eine Mehrzahl von Armelementen 44 befestigt sind, beispielsweise sechs solcher Armelemente, die entlang des Umfangs des Nabenkörpers 42 gleichmäßig zueinander beabstandet sind.

Fig. 7 zeigt eine Vorderansicht eines Armelements 44, wie es bei der Ausführungsform von Fig. 11 verwendet wird, wobei Fig. 9 hiervon eine Seitenansicht zeigt.

An einem freien Ende 45 des Armelements sind jeweils Langlöcher L ausgebildet.

Fig. 10 zeigt in Vorderansicht eine Klinge K, in der ebenfalls Langlöcher L ausgebildet sind.

Durch die vorstehend genannten Langlöcher L ist es mittels einer (nicht gezeigten) Verschraubung möglich, eine Klinge K jeweils an den freien Enden 45 der Armelemente 44 zu befestigen. In Bezug auf die Ausführungsform von Fig. 11 versteht sich, dass eine Klinge jeweils an jedem der Armelemente 44 befestigt ist, wobei dies zur Vereinfachung in Fig. 11 nur für ein Armelement 44 gezeigt ist.

Mittels der genannten Langlöcher L kann die Position einer Klinge K an dem freien Ende 45 eines Armelements 44 in radialer Richtung zum Nabenkörper 42 bei Bedarf verändert werden. Ergänzend oder alternativ ist mittels der Verschraubung möglich, eine verschlissene oder ggf. defekte Klinge K dann gegen eine neue Klinge K auszutauschen.

Des Weiteren ist für die Ausführungsform von Fig. 11 mit einem Pfeil "R" die Rotationsrichtung symbolisiert, mit welcher der Nabenkörper 42 um seine waagerechte Achse A (vgl. auch Fig. 13) drehbar angetrieben wird. Hierzu kommt ein Motor M (vgl. Fig. 13) zum Einsatz, der vorzugsweise hydraulisch funktioniert und entsprechend an ein (nicht gezeigtes) Hydrauliknetz angeschlossen ist. Alternativ hierzu ist auch der Einsatz eines Elektromotors möglich.

Die Anordnung des Nabenkörpers 42 der Schneideinrichtung 40 unterhalb der Fördereinrichtung 40 erfolgt derart, dass sich dabei der Nabenkörper 42 in etwa unterhalb des Spalts zwischen den beiden Haupt-Förderschnecken 16 befindet. Entsprechend gelangen bei einer Drehung des Nabenkörpers 42 um die waagerechte Achse A die Klingen K von unten her mit einem vorzugsweise mittigen Bereich eines auf der Fördereinrichtung 14 aufliegenden Kohlkopf-Gemüses 1 in Kontakt, so dass dadurch der Strunk 2 des Kohlkopf-Gemüses 1 und/oder angrenzende Bereiche davon aus bzw. von dem Kohlkopf-Gemüse 1 vollständig herausgeschnitten werden.

Die Schnittwirkung der an den Armelementen 44 angebrachten Klingen K beim Kontakt mit einem Kohlkopf 1 wird dadurch optimiert, dass die einzelnen Armelemente 44 entlang ihrer Längserstreckung im Bereich ihrer freien Enden 45 in der Rotationsrichtung R des Nabenkörpers 42 jeweils abgewinkelt ausgebildet sind.

Fig. 12 zeigt eine Modifikation der Schneideinrichtung 40 von Fig. 11. Im Unterschied hierzu ist nun auf dem Nabenkörper 42 ein Ringelement 46 auf- bzw. angebracht, wobei die Mehrzahl von Armelementen 44 nun an einer Außenumfangsfläche des Ringelements 46 befestigt sind. Die Anbringung der Klingen K an den jeweiligen freien Enden 45 der Armelemente 44 erfolgt in gleicher Weise wie bei der Ausführungsform von Fig. 11, so dass zur Vermeidung von Wiederholungen auf deren Erläuterung verwiesen werden darf.

Im Unterschied zur Ausführungsform von Fig. 11 wird bei jener von Fig. 12 durch die Verwendung des Ringelements 46 der Vorteil erreicht, dass damit die Befestigung der Mehrzahl von Armelementen 44 hieran einfacher bzw. preiswerter ist und überdies die Möglichkeit besteht, das Ringelement 46, wenn es auf den Nabenkörper 42 aufgebracht ist, in axialer Richtung auf dem Nabenkörper 42 nachzujustieren und erst anschließend an dem Nabenkörper 42 zu befestigen, um somit eine exakte seitliche Ausrichtung auf den oberhalb davon befindlichen Spalt zwischen den beiden Haupt-Förderschnecken 16 der Fördereinrichtung 14 zu gewährleisten.

Bei den Ausführungsformen gemäß Fig. 11 und Fig. 12 ist die Arbeitsweite W, mit der die Klingen K jeweils auf einen Kohlkopf 1 einwirken, unveränderlich bzw. durch die Ausgestaltung dieser Klingen K festgelegt. Vor einer Inbetriebnahme der erfindungsgemäßen Erntemaschine 10 ist es zweckmäßig, an den einzelnen Armelemente 44 jeweils Klingen K zu befestigen, deren Arbeitsweite W (vgl. Fig. 10), mithin also deren Breite an die Sorte bzw. den Wachstumsgrad eines Kohlkopf-Gemüses anzupassen, welches zur Ernte ansteht.

Fig. 13 zeigt eine Perspektivansicht von Teilen einer weiteren Ausführungsform der Schneideinrichtung 40, bei der es möglich ist, die resultierende Arbeitsweite W einer Mehrzahl von Klingen K, die auf einen Kohlkopf 1 einwirken, gezielt zu verändern. Hierzu im Einzelnen:
Die Schneideinrichtung 40 gemäß der Fig. 13 umfasst einen zentrischen Nabenkörper 42, der um eine waagerecht und quer zur Fahrtrichtung F der Erntemaschine 10 verlaufende Achse A gelagert ist und um diese Achse A angetrieben wird.

Auf dem Nabenkörper 42 sind nebeneinander zwei Ringelemente angebracht, nämlich ein erstes Ringelement 47 und ein zweites Ringelement 48. Zumindest eines dieser beiden Ringelemente 47, 48 ist auf dem Nabenkörper 42 parallel zur waagerechten Achse A verschieblich. Jedenfalls sind beide dieser Ringelemente 47, 48 drehfest mit dem Nabenkörper 42 verbunden, was durch eine geeignete Nut 33 (vgl. Fig. 4) und einen formschlüssigen Kontakt mit einer Innenumfangsfläche der Ringelemente 47, 48 erreicht wird.

An der Außenumfangsfläche eines jeweiligen Ringelements 47, 48 sind jeweils eine Mehrzahl von Armelementen 44 angebracht, die jeweils radial von den Ringelementen abragen. Ein solches Armelement 44 ist in der Fig. 8 in einer Vorderansicht und in der Fig. 9 in einer Seitenansicht gezeigt. Hieraus ist ersichtlich, dass die Armelemente 44 an einem vorderen freien Ende 45 hiervon jeweils gekröpft und entlang ihrer Längserstreckung abgewinkelt ausgebildet sind.

Die Armelemente 44 dienen dazu, dass an ihren freien Enden 45 jeweils eine Klinge K (vgl. Fig. 10) angebracht wird. Die Anbringung von Klingen K an den jeweiligen freien Enden 45 der Armelemente 44 erfolgt in gleicher Weise wie bereits zur Ausführungsform von Fig. 11 erläutert, so dass zur Vermeidung von Wiederholungen hierauf verwiesen werden darf.

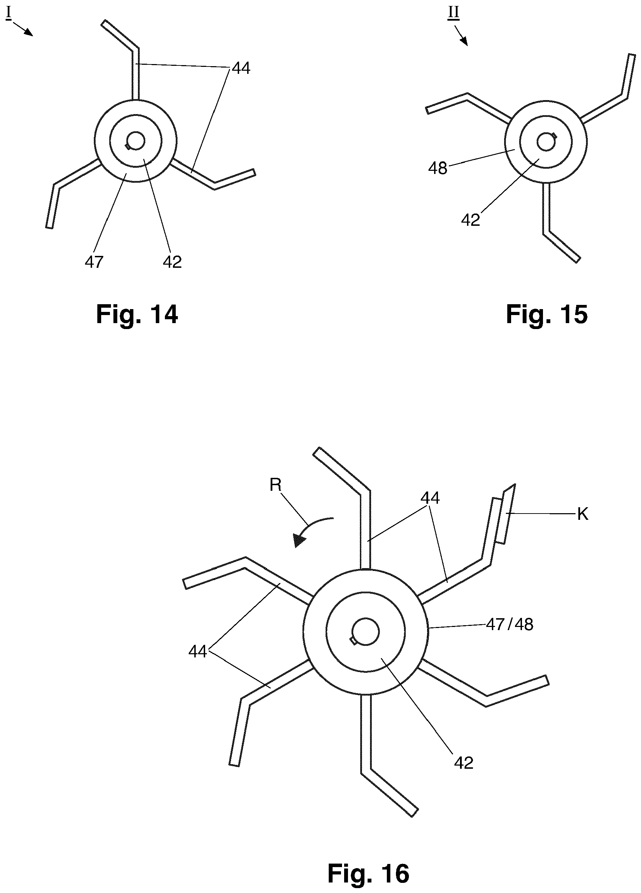

In der Fig. 16 ist eine vollständige Seitenansicht der Schneideinrichtung 40 gezeigt, wenn an jedem der Ringelemente 47, 48 jeweils drei Armelemente 44 angebracht und beide Ringelemente 47, 48 auf dem Nabenkörper 42 montiert sind. Entsprechend sind dann für den Nabenkörper 42 dieser Schneideinrichtung 40 insgesamt sechs solcher Armelemente 44 vorgesehen, wobei, wie soeben erläutert, an den freien Enden dieser Armelemente 44 jeweils Klingen K befestigt sind.

In Bezug auf die Mehrzahl von Armelementen 44, die an dem bzw. für den Nabenkörper 42 vorgesehen sind, wird an dieser Stelle gesondert darauf hingewiesen, dass bei der Ausführungsform von Fg. 13 diese Mehrzahl von Armelementen 44 zwei Gruppen von Armelementen zugewiesen sind, nämlich einer ersten Gruppe I und einer zweiten Gruppe II von Armelementen. Im Einzelnen ist die erste Gruppe I von Armelementen 44 (vgl. Fig. 14) an der Außenumfangsfläche des ersten Ringelements 47 angebracht, wobei die zweite Gruppe II von Armelementen 44 an der Außenumfangsfläche des zweiten Ringelements 48 angebracht ist (vgl. Fig. 15).

In Bezug auf die vorstehend genannten Gruppen I, II von Armelementen 44 ist es zweckmäßig, wenn diese Gruppen I, II jeweils zwei oder drei Armelemente umfassen, so dass die Mehrzahl von Armelementen 44 insgesamt vier oder sechs beträgt und somit die Gesamtanzahl von Armelementen ganzzahlig ist. Hierdurch ist gewährleistet, dass ein auf der Fördereinrichtung 14 aufliegender Kohlkopf 1 von unten her mit einer ausreichenden Anzahl von Klingen K kontaktiert wird, um wie erläutert den Strunk und ggf. angrenzende Bereiche hierzu aus dem Kohlkopf herausschneiden.

Eine Montage der beiden Ringelemente 47, 48 an dem Nabenkörper 42 erfolgt derart, dass die jeweiligen Armelemente 44 der ersten Gruppe I und der zweiten Gruppe II entlang des Umfangs des Nabenkörpers 42 alternierend und seitlich, d.h. quer zur Fahrtrichtung F gesehen zueinander versetzt angeordnet sind.

Der Nabenkörper 42 ist mit einem Motor M wirkverbunden, der an einer mit der Rahmeneinrichtung 12 verbundenen Halteplatte 49 festgeschraubt ist. Der Nabenkörper 42 sitzt auf einer Antriebswelle 50 des Motors M. In der Halteplatte 42 sind vertikal verlaufende Langlöcher L ausgebildet, in denen die Verschraubungen für den Motor M eingreifen. Entsprechend ist es dank dieser Langlöcher L möglich, eine vertikale Positionierung des Motors M zu verändern und somit einen Abstand des Nabenkörpers 42 mit den daran angebrachten Armelementen 44 und der daran befestigten Klingen K relativ zur Fördereinrichtung 14 anzupassen.

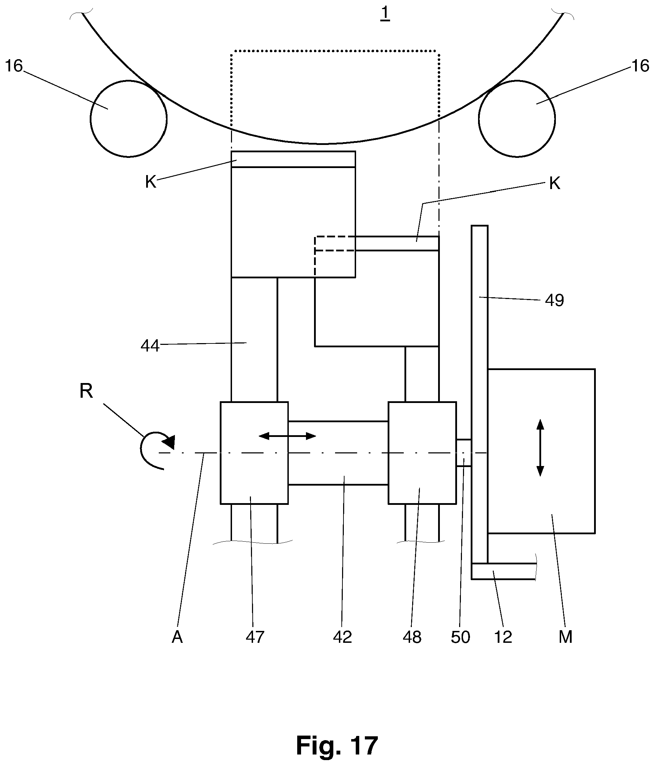

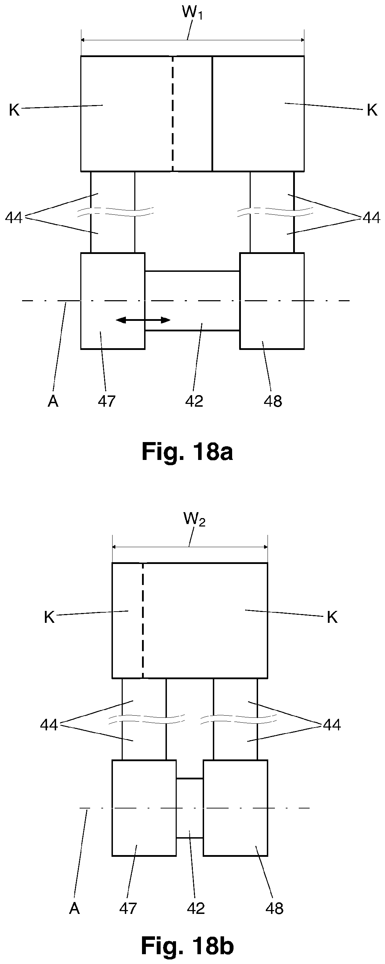

In der Fig. 17 und auch in den Fig. 18a, Fig. 18b ist eine vereinfachte Ansicht auf einen Teil der Schneideinrichtung 40 gemäß Fig. 13 von hinten gezeigt, um deren Positionierung relativ zur Fördereinrichtung 14 als auch eine Verstellbarkeit einer Arbeitsweite der Klingen K, die an den Armelementen 44 gemäß der ersten Gruppe I und der zweiten Gruppe II befestigt sind, zu veranschaulichen. Hierzu im Einzelnen folgende Erläuterung:
Das Schneidelement 30 ist mit seinem Motor M an der Halteplatte 49 derart befestigt, dass sich der Nabenkörper 42 in etwa mittig zwischen den beiden Haupt-Förderschnecken 16 der Fördereinrichtung 14 und somit unterhalb des dazwischen gebildeten Spalts davon befindet.

Die Fig. 17 zeigt an dem ersten Ringelement 47 und an dem zweiten Ringelement 48 zur Vereinfachung jeweils nur ein Armelement 44, an dessen freiem Ende 45 wie erläutert eine Klinge K befestigt ist. In Folge dessen, dass die Armelemente 44 der ersten Gruppe I und der zweiten Gruppe II an ihren vorderen freien Enden 45 in Richtung der jeweils anderen Gruppe gekröpft ausgebildet sind, kommt es - in Fahrtrichtung F der Erntemaschine 10 gesehen - zu einer teilweisen Überlappung der Klingen K, die einerseits der an dem ersten Ringelement 47 angebrachten ersten Gruppe I von Armelementen 44 und andererseits der an dem zweiten Ringelement 48 angebrachten zweiten Gruppe II von Armelementen 44 zugewiesen sind. Jedenfalls wird durch eine "Addition" der Breite der Klingen K quer zur Fahrtrichtung F eine Arbeitsweite W definiert, mit der die Klingen K der ersten Gruppe I und der zweiten Gruppe II von Armelementen 44 bei der Drehung des Nabenkörpers 42 um die waagerechte Achse A alternierend von unten her auf einen Kohlkopf 1 einwirken, der auf den Haupt-Förderschnecken 16 der Fördereinrichtung 14 von oben her aufliegt.

Die Rotationsrichtung, mit welcher der Nabenkörper 42 durch den Motor M um die waagerechte Achse A angetrieben wird, ist in den Fig. 13, 16 und 17 jeweils durch einen Pfeil "R" symbolisiert.

Mit einem horizontalen Pfeil ist sowohl in der Fig. 17 als auch in der Fig. 18a symbolisiert, dass zumindest das erste Ringelement 47 auf dem Nabenkörper 42 entlang der waagerechten Achse A verschoben werden kann.

In der Betriebsposition gemäß der Fig. 18a sind die beiden Ringelemente 47 und 48 maximal voneinander beabstandet. Hieraus resultiert eine Arbeitsweite W₁, mit der die Klingen K der ersten Gruppe I und der zweiten Gruppe II alternierend auf einen Kohlkopf 1 einwirken, wenn der Nabenkörper 42 um seine waagerechte Achse A von dem Motor M angetrieben wird.

Im Zusammenhang mit Fig. 18a und Fig. 18b wird an dieser Stelle gesondert darauf hingewiesen, dass hierin die beiden gezeigten Klingen K, die jeweils der ersten Gruppe I und der zweiten Gruppe II von Armelementen 44 zuzuordnen sind, zur Vereinfachung in einer jeweils obersten Position gezeigt sind, in der sie einen minimalen Abstand zur darüber befindlichen Fördereinrichtung 14 haben.

Die vorstehend erläuterte Höhenverstellbarkeit für den Motor M ist in der Fig. 17 auch durch ein vertikalen Doppelpfeil symbolisiert.

In Abhängigkeit von bzw. in Anpassung zu verschiedenen Sorten von Kohlkopf-Gemüse, die sich in ihrer Größe bzw. in ihrem Durchmesser unterscheiden, ist es erfindungsgemäß für die vorstehend erläuterte Schneideinrichtung 40 gemäß Fig. 13 bzw. Fig. 17 möglich, die resultierende Arbeitsweite W für die Klingen K und/oder dessen Abstand zur Fördereinrichtung 14 zu verändern. Beispielsweise ist in der Betriebsposition von Fig. 18b das erste Ringelement 47 entlang des Nabenkörper 42 in Richtung des zweiten Ringelements 48 bewegt worden, wodurch nun ein Abstand der beiden Ringelemente 47, 48 zueinander im Vergleich zur Betriebsposition von Fig. 18a abgenommen hat und insoweit auch die Überlappung der beiden Klingen K größer geworden ist. In Folge dessen ist nun die resultierende Arbeitsweite W₂ kleiner als im Vergleich zur Arbeitsweite W₁ von Fig. 18a. Diesbezüglich versteht sich, dass sich die kleinere Arbeitsweite W₂ für Kohlköpfe empfiehlt, die einen kleineren Durchmesser aufweisen, beispielsweise für Rotkohl.

Abweichend von der obigen Erläuterung ist es für eine Veränderung der resultierenden Arbeitsweite W der Klingen K auch möglich, entweder nur das zweite Ringelement 48 (anstatt des ersten Ringelements 47) auf dem Nabenkörper 42 entlang der Achse A zu verschieben, oder aber beide Ringelemente 47, 48 auf dem Nabenkörper 42 zu verschieben, um deren axialen Abstand zueinander zu verändern.

In Bezug auf die Schneideinrichtung 40 und deren möglicher Ausführungsformen gemäß der Fig. 7-18 wird an dieser Stelle gesondert darauf hingewiesen, dass diese Schneideinrichtung 40 vorzugsweise in dem hinteren Bereich 21 der Erntemaschine 10 angeordnet ist, jedenfalls - in der Förderrichtung 15 gesehen - hinter bzw. stromabwärts von den beiden schräg gestellten Kreissägen 34 (vgl. Fig. 6). Die Schneideinrichtung 40 kann in gleicher Weise bei der Ausführungsform von Fig. 1 oder von Fig. 4 vorgesehen sein.

Allen der vorstehend genannten Ausführungsformen nach den Fig. 11-18 ist gemeinsam, dass die hierbei eingesetzten Klingen K, ungeachtet von deren resultierender Arbeitsweite W, in Bezug auf ihre Schnittkante, die in Schnitteingriff mit einem Kohlkopf gelangt, einen geraden Verlauf aufweisen und an einem jeweiligen Armelement 44 derart befestigt sind, dass diese Schnittkante im Wesentlichen Waagerecht verläuft. Entsprechend kann mit der Schneideinrichtung 40 und der zugehörigen Klingen K an einem Kohlkopf 1 ein Schneidvorgang mit einem sog. "geraden Schnitt" durchgeführt werden. Wie vorstehend an anderer Stelle bereits erläutert, empfiehlt sich die Vornahme eines solchen "geraden Schnitts" im Anschluss an das Heraussägen eines keilförmigen Teils aus einem Kohlkopf 1 mittels der beiden schräg angeordneten Kreissägen 34. Dies wird dadurch ermöglicht, dass die Schneideinrichtung 40, wie erläutert, in der Förderrichtung 15 gesehen hinter bzw. stromabwärts von den beiden schräg gestellten Kreissägen 34 angeordnet ist.

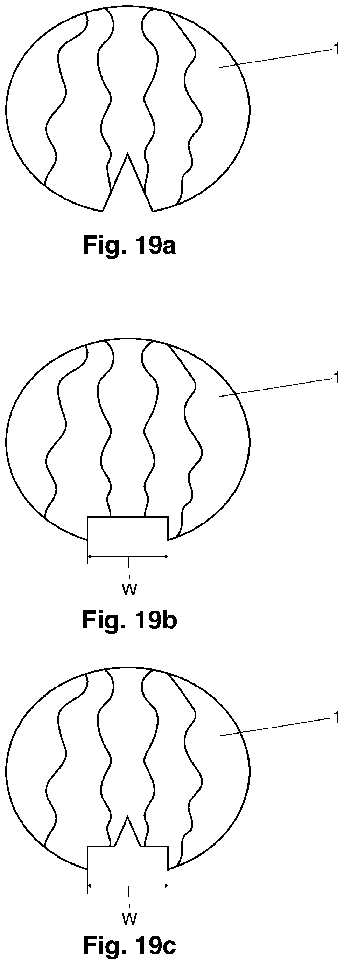

In den Fig. 19a-19c sind verschiedene Schnittbilder für einen Kohlkopf 1 gezeigt, an dem erfindungsgemäß ein Schneidvorgang durchgeführt worden ist.

Das Schnittbild von Fig. 19a wird mit einer Ausführungsform der erfindungsgemäßen Erntemaschine 10 erzielt, nämlich mittels der beiden schräg gestellten Kreissägen 34, mit denen wie erläutert ein keilförmiger Teil von unten her aus dem Kohlkopf 1 herausgesägt wird. Hierfür kann es zweckmäßig sein, wenn diese beiden schräg gestellten Kreissägen 34 in einem mittigen Bereich der Erntemaschine 10 bzw. deren Rahmeneinrichtung 12 angeordnet sind.

Das Schnittbild von Fig. 19b wird mit einer Ausführungsform der erfindungsgemäßen Erntemaschine 10 erzielt, nämlich mittels des rotierenden Nabenkörpers 42 der Schneideinrichtung 40 und der Klingen K, die an den freien Enden 45 der einzelnen Armelemente 44 befestigt sind. Als Ergebnis dieser Bearbeitung ist der Strunk des Kohlkopfs 1 in einem Bereich herausgeschnitten, der in seiner Breite der Arbeitsweite W der Klingen K (beispielsweise der Arbeitsweise W einer Klinge K gemäß Fig. 10, oder einer Arbeitsweite W₁ von Fig. 18a oder der Arbeitsweite W₂ von Fig. 18b) entspricht.

Das Schnittbild von Fig. 19c entspricht einer Überlagerung der Schnittbilder von Fig. 19a und 19b und wird erfindungsgemäß dadurch erreicht, dass an einem Kohlkopf 1 zunächst ein Schneidvorgang mittels der beiden schräg gestellten Kreissägen 34 durchgeführt wird, wobei im Anschluss daran ein weiterer Schneidvorgang durch die Schneideinrichtung 40 nach einer Ausführungsform gemäß Fig. 7-18 durchgeführt wird. Dies wird dadurch erreicht, dass die Schneideinrichtung 40 - in der Förderrichtung 15 gesehen - hinter bzw. stromabwärts der beiden schräg gestellten Kreissägen 34 angeordnet ist.

Eine Optimierung des Schnittbilds von Fig. 19c kann dadurch erreicht werden, dass bei einer weiteren Ausführungsform der vorliegenden Erfindung das Schneidelement 30 (vgl. Fig. 5) - in der Förderrichtung 15 gesehen - vor bzw. stromaufwärts von den beiden schräg gestellten Kreissägen 34 angeordnet ist, vorzugsweise zu Beginn des Fördersegments 20. Umgekehrt bedeutet dies, dass für diesen Fall dann die beiden schräg gestellten Kreissägen 34 (vgl. Fig. 6) - in der Förderrichtung 15 gesehen - hinter bzw. stromabwärts von dem Schneidelement 30 gemäß Fig. 5 angeordnet sind. Jedenfalls kann damit ein Verfahren zum Ernten von Kohlkopf-Gemüse durchgeführt werden, bei dem dann, wie eingangs an anderer Stelle bereits erläutert, an drei verschiedenen Stellen entlang der Förderrichtung 15 aufeinanderfolgend drei verschiedene Schneidvorgänge an einem auf der Fördereinrichtung 14 befindlichen Kohlkopf 1 durchgeführt werden.

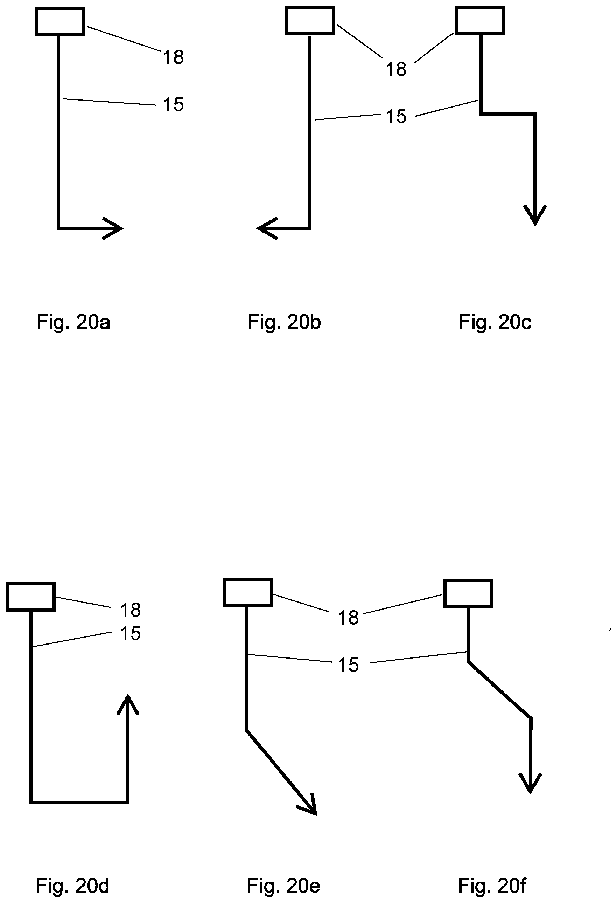

In Bezug auf das Merkmal der genannten "Förderrichtung 15" darf an dieser Stelle gesondert darauf hingewiesen werden, dass es sich hierbei im Sinne der vorliegenden Erfindung um die Richtung handelt, mit der ein Kohlkopf-Gemüse 1, nachdem es zu Beginn des Aufnahmesegments 18 aus der landwirtschaftlichen Nutzfläche N herausgezogen worden ist, dann auf bzw. entlang der Fördereinrichtung 14 zu dem hinteren Bereich 21 der Erntemaschine 10 transportiert wird und dort in der Regel in einen Auffangbehälter bzw. "Bunker" übergeben wird. Jedenfalls kann diese Förderrichtung 15, in Abweichung von den Darstellungen in den Fig. 1 bzw. Fig. 4, auch derart verlaufen, dass der Kohlkopf 1 auf seinem Weg in den Bunker mindestens einmal eine Richtungsänderung (vgl. Fig. 20a, Fig. 20b, Fig. 20e) oder zweimal eine Richtungsänderung (vgl. Fig. 20c, Fig. 20d, Fig. 20f) erfährt. Diesbezüglich versteht sich, dass bei diesen Beispielen dann auch die Fördereinrichtung 14 mit einer entsprechenden Richtungsänderung ausgestattet ist, was beispielsweise durch weitere Endlosbänder, auf denen die geerdeten Kohlköpfe 1 transportiert werden, realisiert sein kann.

Jedenfalls ist für die schematischen Beispiele für einen Verlauf der Förderrichtung 15 mit zumindest einer Richtungsänderung gemäß der Fig. 20a-20f hervorzuheben, dass insbesondere der vorstehend genannte dritte Schneidvorgang gemäß Schritt iii), der mittels der Schneideinrichtung 40 durchgeführt wird, auch in einem Bereich der Erntemaschine 10 erfolgen kann, nachdem die Förderrichtung 15 bereits mindestens einmal ihren Verlauf geändert hat.

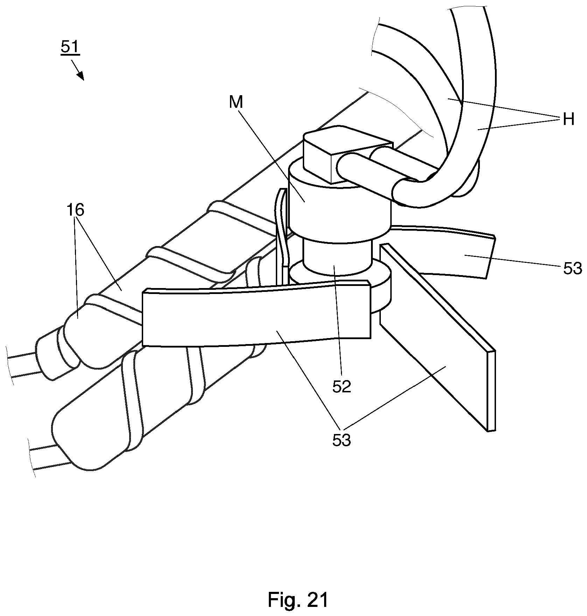

Für alle der vorstehend genannten Ausführungsformen der erfindungsgemäßen Erntemaschine 10 können seitlich angrenzend zur Fördereinrichtung 14 und deren Haupt-Förderschnecken 16 jeweils eine Reinigungseinrichtung 51 vorgesehen sein, die perspektivisch und vereinfachend in Fig. 21 gezeigt ist.

Die Reinigungseinrichtung 51 umfasst eine um eine im Wesentlichen senkrecht verlaufende Achse angetriebene Nabe 52, an der zumindest ein flexibles Abstreifelement 53, vorzugsweise eine Mehrzahl von solchen Abstreifelementen 53, angebracht ist bzw. sind.

Ein Antrieb der Nabe 52 kann hydraulisch bzw. durch den Anschluss an ein Hydrauliknetz erfolgen, was durch die in Fig. 21 gezeigten Hydraulikschläuche H kenntlich gemacht ist.

Bei einem Antrieb der Nabe 52 um ihre Achse werden die flexiblen Abstreifelemente 53 in Kontakt mit den daran angrenzenden Haupt-Förderschnecken 16 gebracht. Falls ein Kohlkopf 1 von oben her auf den Haupt-Förderschnecken 16 aufliegt und entlang der Förderstrecke 15 transportiert wird, wird durch eine Rotation der Nabe 52 und der daran angebrachten flexiblen Abstreifelemente 53 erreicht, dass störende Verschmutzungen von dem Kohlkopf 1, beispielsweise Erdreich oder dergleichen, entfernt werden.

Ausweislich der Fig. 1 ist es zweckmäßig, wenn Reinigungseinrichtungen 51 beiderseits der Fördereinrichtung 14 angeordnet sind, beispielsweise - in Fahrtrichtung F der Erntemaschine 10 gesehen - hinter dem Aufnahmesegment 18 bzw. zu Beginn des Fördersegments 20. Dies gilt in gleicher Weise auch für alle übrigen Ausführungsformen der erfindungsgemäßen Erntemaschine 10.

Die erfindungsgemäße Erntemaschine 10 ist zweckmäßigerweise bei allen der gezeigten Ausführungsformen mit einer Steuer- oder Regeleinrichtung S (vgl. Fig. 1) ausgestattet , mit der ein Antrieb der zugehörigen Komponenten, wie beispielsweise die einzelnen Förderschnecken 16, 22,das Schneidelement 30 und/oder die Schneideinrichtung 40 gesteuert oder geregelt wird.

### Bezugszeichenliste

- 1: Kohlkopf-Gemüse
- 2: Strunk
- 10: Erntemaschine
- 12: Rahmeneinrichtung
- 14: Fördereinrichtung
- 15: Förderstrecke / Förderrichtung
- 16: Haupt-Förderschnecke(n)
- 17: vorderes freies Ende (einer Haupt-Förderschnecke 16)
- 18: Aufnahmesegment
- 20: Fördersegment
- 21: hinterer Bereich (der Erntemaschine 10)
- 22: Zusatz-Förderschnecke
- 23: freies Ende (einer Zusatz-Förderschnecke 22)
- 24: Führungselement
- 26: Stützband
- 27: Streben
- 28: Welle
- 29: Drehlager
- 30: Schneidelement
- 31: Kreissäge (des Schneidelements 30)
- 32: Ringflansch
- 33: Haltearm
- 34: Kreissäge(n)
- 35: Halterung
- 40: Schneideinrichtung
- 42: Nabenkörper
- 43: Nut
- 44: Armelement(e)
- 45: freies Ende eines Armelements 44
- 46: Ringelement
- 47: erstes Ringelement
- 48: zweites Ringelement
- 49: Halteplatte
- 50: Antriebswelle
- 51: Reinigungseinrichtung
- 52: Nabe
- 53: flexibles Abstreifelement
- A: waagerechte Achse
- A₃₁: Achse (der Kreissäge 31)
- D: Drehachse
- F: Fahrtrichtung (der Erntemaschine 10)
- H: Hydraulikschlauch
- K: Klinge(n)
- I: erste Gruppe (von Armelementen 44)
- II: erste Gruppe (von Armelementen 44)
- L: Langloch
- M: Motor
- N: landwirtschaftliche Nutzfläche
- R: Rotationsrichtung (des Nabenkörpers 42)
- S: Steuer- oder Regeleinrichtung
- W: Arbeitsweite (einer Klinge K)
- W₁: erste Arbeitsweite
- W₂: zweite Arbeitsweite

## Patentansprüche

1. Erntemaschine (10) für Kohlkopf-Gemüse (1), umfassend
eine Rahmeneinrichtung (12),
eine an der Rahmeneinrichtung (12) vorgesehene und sich in Fahrtrichtung (F) der Erntemaschine (10) erstreckende Fördereinrichtung (14), wobei die Fördereinrichtung (14) ein Aufnahmesegment (18) zum Aufnehmen von Kohlkopf-Gemüse (1) aus einer landwirtschaftlichen Nutzfläche (N) und ein Fördersegment (20) zum Transportieren des aufgenommenen Kohlkopf-Gemüses (1) in einer Förderrichtung (15) zu einem hinteren Bereich (21) der Erntemaschine (10) aufweist,
**dadurch gekennzeichnet,**
**dass** unterhalb der Fördereinrichtung (14) eine Schneideinrichtung (40) angeordnet ist, die einen um eine waagerecht und quer zur Fahrtrichtung (F) der Erntemaschine (10) verlaufende Achse (A) antreibbaren Nabenkörper (42) umfasst, an dem zumindest eine Klinge (K) vorgesehen ist, wobei bei einer Drehung des Nabenkörpers (32) um die waagerechte Achse (A) die Klinge (K) von unten her mit einem mittigen Bereich eines auf der Fördereinrichtung (14) aufliegenden Kohlkopf-Gemüses (1) in Kontakt bringbar ist, so dass dadurch der Strunk (2) des Kohlkopf-Gemüses (1) und/oder angrenzende Bereiche davon aus dem Kohlkopf-Gemüse (1) herausgeschnitten werden.

2. Erntemaschine (10) nach Anspruch 1, **dadurch gekennzeichnet, dass** die Fördereinrichtung (14) ein Paar Haupt-Förderschnecken (16) umfasst, die drehbar gelagert und um ihre Längsachse antreibbar sind, wobei die Haupt-Förderschnecken (16) zumindest in dem Aufnahmesegment (18) angeordnet und dort jeweils ein vorderes freies Ende (17) aufweisen, das sich in Fahrtrichtung (F) der Erntemaschine (10) erstreckt, und dass die Fördereinrichtung (14) ein Paar drehbar gelagerte Zusatz-Förderschnecken (22) umfasst, die in dem Aufnahmesegment (18) der Fördereinrichtung (14) jeweils parallel zu den Haupt-Förderschnecken (16) angeordnet und um ihre Längsachse antreibbar sind.

3. Erntemaschine (10) nach Anspruch 1 oder 2, **dadurch gekennzeichnet, dass** die Haupt-Förderschnecken (16) und die Zusatz-Förderschnecken (22) zusammen an einem Führungselement (24) angebracht sind, das an einem vorderen Ende der Rahmeneinrichtung (12) gelenkig angebracht und um eine Drehachse (D), die waagerecht und quer zur Fahrtrichtung (F) der Erntemaschine (10) verläuft, verschwenkbar ist, so dass damit eine Neigung der Schnecken (16; 22) relativ zu einer darunter befindlichen landwirtschaftlichen Nutzfläche (N) gemeinsam verstellbar ist.

4. Erntemaschine (10) nach einem der vorhergehenden Ansprüche, **dadurch gekennzeichnet, dass** an dem Nabenkörper (42) eine Mehrzahl von radial abragenden Armelementen (44) vorgesehen sind, wobei an den freien Enden (45) dieser Armelemente (44) jeweils eine Klinge (K) angebracht ist, vorzugsweise, dass eine Klinge (K) an einem freien Ende (45) des Armelements (44) verstellbar festgeschraubt und somit ein Abstand der Klinge (K) zur Fördereinrichtung (14) veränderlich ist, weiter vorzugsweise, dass eine Klinge (K) bei Bedarf austauschbar ist, weiter vorzugsweise, dass auf einer Aussenumfangsfläche des Nabenkörpers (42) ein Ringelement (46) angebracht ist, an dessen Umfang die Armelemente (44) gleichmäßig zueinander beabstandet befestigt sind, weiter vorzugsweise, dass die Armelemente (44) entlang ihrer Längserstreckung im Bereich ihrer freien Enden (45) in der Rotationsrichtung (R), in welcher der Nabenkörper (42) um die waagerechte Achse (A) drehbar angetrieben wird, jeweils abgewinkelt ausgebildet sind.

5. Erntemaschine (10) nach Anspruch 4, **dadurch gekennzeichnet, dass** ein erstes Ringelement (47) und ein zweites Ringelement (48) nebeneinander auf einer Aussenumfangsfläche des Nabenkörpers (42) angebracht sind, wobei die Mehrzahl von Armelementen (44) zwei Gruppen von Armelementen (44) zugewiesen sind, nämlich einer ersten Gruppe (I) und einer zweiten Gruppe (II) von Armelementen (44), wobei die Armelemente (44) der ersten Gruppe (I) entlang des Umfangs des ersten Ringelements (47) und die Armelemente (44) der zweiten Gruppe (II) entlang des Umfangs des zweiten Ringelements (48) jeweils befestigt sind und dabei die Armelemente (44) der ersten Gruppe (I) und der zweiten Gruppe (II) in Umfangsrichtung jeweils zueinander versetzt angeordnet sind.

6. Erntemaschine (10) nach Anspruch 5, **dadurch gekennzeichnet, dass** die Armelemente (44) der ersten Gruppe (I) und der zweiten Gruppe (II) im Bereich ihrer freien Enden (45) in Richtung der jeweils anderen Gruppe jeweils gekröpft ausgebildet sind

7. Erntemaschine (10) nach Anspruch 5 oder 6, **dadurch gekennzeichnet, dass** zumindest eines der Ringelemente (47, 48) entlang der waagerechten Achse (A) auf dem Nabenkörper (42) verschieblich gelagert ist, derart, dass damit ein Abstand der beiden Ringelemente (47, 48) relativ zueinander entlang der waagerechten Achse (A) veränderlich einstellbar ist und somit eine resultierende Arbeitsweite (W₁, W₂), mit der die Klingen (K) der Armelemente (44) der ersten Gruppe (I) und der zweiten Gruppe (II) von Armelementen (44) auf ein auf der Fördereinrichtung (14) aufliegendes Kohlkopf-Gemüse (1) einwirken, veränderlich ist, wobei das verschiebliche Ringelement (47, 48) an seiner Innenumfangsfläche an zumindest einer Stelle der Außenumfangsfläche des Nabenkörpers (42) formschlüssig kontaktiert und dadurch drehfest mit dem Nabenkörper (42) verbunden ist,

8. Erntemaschine (10) nach einem der vorhergehenden Ansprüche, umfassend einen Motor (M), **dadurch gekennzeichnet, dass** der Nabenkörper (42) mit dem Motor (M) wirkverbunden ist, der an der Rahmeneinrichtung (12) angebracht ist, wobei der Motor (M) an der Rahmeneinrichtung (12) in vertikaler Richtung verstellbar befestigt ist und damit ein Abstand des Motors (M) und des damit wirkverbunden Nabenkörpers (42) und des oder der daran angebrachten Armelements bzw. Armelemente (44) relativ zur Fördereinrichtung (14) verstellbar ist.

9. Erntemaschine (10) nach einem der vorhergehenden Ansprüche, **dadurch gekennzeichnet, dass** unterhalb der Fördereinrichtung (14) und - in der Förderrichtung (15) gesehen - zu Beginn des Fördersegments (20) ein Schneidelement (30) angeordnet ist, das auf ein auf der Fördereinrichtung (14) aufliegendes Kohlkopf-Gemüse (1) einwirkt, derart, dass dadurch der Strunk (2) des Kohlkopf-Gemüses (1) quer zu seiner Achse zumindest teilweise abgeschnitten und/oder an dem Kohlkopf-Gemüse (1) anhaftende Verschmutzungen entfernt werden, vorzugsweise, dass - in der Förderrichtung (15) gesehen - hinter bzw. stromabwärts von dem Schneidelement (30) mindestens zwei versetzt angeordnete Kreissägen (34) vorgesehen sind, die schräg von unten her in den Spalt zwischen die beiden Haupt-Förderschnecken (16) eingreifen und in ihrer gegenseitigen Schräglage derart angeordnet sind, dass sie ein keilförmiges Teil aus einem Kohlkopf-Gemüse (1), das von oben her auf der Fördereinrichtung (14) und deren beiden Haupt-Förderschnecken (16) aufliegt, mitsamt dem Strunk (2) heraussägen.

10. Erntemaschine (10) für Kohlkopf-Gemüse (1), umfassend
eine Rahmeneinrichtung (12),
eine an der Rahmeneinrichtung (12) vorgesehene und sich in Fahrtrichtung (F) der Erntemaschine (10) erstreckende Fördereinrichtung (14), wobei die Fördereinrichung (14) ein Aufnahmesegment (18) zum Aufnehmen von Kohlkopf-Gemüse (1) aus einer landwirtschaftlichen Nutzfläche (N) und ein Fördersegment (20) zum Transportieren des aufgenommenen Kohlkopf-Gemüses (1) in einer Förderrichtung (15) zu einem hinteren Bereich (21) der Erntemaschine (10) aufweist, wobei die Fördereinrichtung (14) Haupt-Förderschnecken (20) aufweist, die in dem Fördersegment (20) parallel zueinander verlaufen,
ein unterhalb der Fördereinrichtung (14) angeordnetes Schneidelement (30), das auf ein auf der Fördereinrichtung (14) aufliegendes Kohlkopf-Gemüse (1) einwirkt, und
mindestens zwei versetzt angeordnete Kreissägen (34), die schräg von unten her in den Spalt zwischen den beiden Haupt-Förderschnecken (16) eingreifen und in ihrer gegenseitigen Schräglage derart angeordnet sind, dass sie ein keilförmiges Teil aus einem Kohlkopf-Gemüse (1), das von oben her auf der Fördereinrichtung (14) und deren beiden Haupt-Förderschnecken (16) aufliegt, mitsamt dem Strunk (2) heraussägen,
**dadurch gekennzeichnet,**
**dass** das Schneidelement (30) - in der Förderrichtung (15) gesehen - zu Beginn des Fördersegments (20) und vor bzw. stromaufwärts der beiden versetzt angeordneten und schräg von unten her in den Spalt zwischen den beiden Haupt-Förderschnecken (16) eingreifenden Kreissägen (34) angeordnet ist und dabei auf ein auf der Fördereinrichtung (14) aufliegendes Kohlkopf-Gemüses (1) einwirkt, derart, dass dadurch der Strunk (2) des Kohlkopf-Gemüses (1) quer zu seiner Achse zumindest teilweise abgeschnitten und/oder an dem Kohlkopf-Gemüse (1) anhaftende Verschmutzungen entfernt werden.

11. Erntemaschine (10) nach Anspruch 10, **dadurch gekennzeichnet, dass** die beiden versetzt angeordneten Kreissägen (34) in einem mittigen Bereich des Fördersegments (20) angeordnet sind.

12. Erntemaschine (10) nach einem der Ansprüche 9 bis 11, **dadurch gekennzeichnet, dass** das Schneidelement (30) eine Kreissäge (31) umfasst, die um eine Achse (A₃₁) drehbar angetrieben ist, wobei die Achse (A₃₁) senkrecht zur Längserstreckung der Haupt-Förderschnecken (16) und zur Förderrichtung (15) verläuft, vorzugsweise, dass die Kreissäge (31) mit ihrer Achse (A₃₁) unterhalb einer Haupt-Förderschnecke (16) angeordnet ist und dabei einen Durchmesser aufweist, mit dem die Kreissäge (31) den Abstand bis zu der jeweils anderen gegenüberliegenden Haupt-Förderschnecke (16) überbrückt.

13. Erntemaschine (10) nach einem der vorhergehenden Ansprüche, **dadurch gekennzeichnet, dass** an zumindest einer Seite der Fördereinrichtung (14) zumindest eine Reinigungseinrichtung (51) vorgesehen ist, die eine um eine senkrecht verlaufende Achse angetriebene Nabe (52) mit zumindest einem flexiblen Abstreifelement (53) umfasst, wobei beim Antrieb der Nabe (52) um ihre Achse das flexible Abstreifelement (53) in Kontakt mit der Fördereinrichtung (14) und darauf aufliegendem Kohlkopf-Gemüse (1) bringbar ist, vorzugsweise, dass die Reinigungseinrichtung (51) - in Fahrtrichtung (F) der Erntemaschine (10) gesehen - hinter dem Aufnahmesegment (18) der Fördereinrichtung (14) und seitlich angrenzend zum Fördersegment (20) angeordnet ist, weiter vorzugsweise, dass die Reinigungseinrichtung (51) - in Fahrtrichtung (F) der Erntemaschine (10) gesehen - zu Beginn des Fördersegments (20) angeordnet ist, weiter vorzugsweise, dass an beiden Seiten der Fördereinrichtung (14) jeweils zumindest eine Reinigungseinrichtung (51) vorgesehen ist.

14. Verfahren zum Ernten von Kohlkopf-Gemüse (1), bei dem das Kohlkopf-Gemüse (1) aus einer landwirtschaftlichen Nutzfläche (N) herausgezogen wird und anschließend auf einer sich in einer Förderrichtung (15) bewegenden Fördereinrichtung (14) transportiert wird, wobei an einem Kohlkopf-Gemüse (1), wenn es sich auf der Fördereinrichtung (14) befindet, an zumindest zwei verschiedenen Stellen entlang der Förderrichtung (15) ein Schneidvorgang durchgeführt wird, um den Strunk (2) zumindest teilweise aus dem Kohlkopf-Gemüse (1) herauszuschneiden und/oder an dem Kohlkopf-Gemüse (1) anhaftende Verschmutzungen zu entfernen,
**dadurch gekennzeichnet,**
**dass** an dem Kohlkopf-Gemüse (1), das auf der Fördereinrichtung (14) transportiert wird, entlang der Förderrichtung (15) an drei verschiedenen Stellen aufeinanderfolgend unterschiedliche Schneidvorgänge durchgeführt werden, nämlich
(i) ein erster Schneidvorgang, bei dem der Strunk (2) des Kohlkopf-Gemüses (1) quer zu seiner Achse zumindest teilweise abgeschnitten wird,
(ii) ein zweiter Schneidvorgang, bei dem ein keilförmiges Teil aus dem Kohlkopf-Gemüse (1) von unten her herausgesägt wird, und
(iii) ein dritter Schneidvorgang, bei dem weitere Teile des Kohlkopf-Gemüses (1) von unten her mit einer geraden und waagerecht angeordneten Klinge herausgeschnitten werden.

15. Verfahren nach Anspruch 14, **dadurch gekennzeichnet, dass** das Verfahren mit einer Erntemaschine (10) nach einem der Ansprüche 1 bis 13 durchgeführt wird.

## Claims

1. Harvesting machine (10) for cabbage vegetables (1), comprising
a frame device (12),
a conveyor device (14) provided on the frame device (12) and extending in the direction of travel (F) of the harvesting machine (10), the conveyor device (14) having a receiving segment (18) for receiving cabbage vegetables (1) from an agricultural area (N) and a conveyor segment (20) for transporting the received cabbage vegetables (1) in a conveying direction (15) to a rear region (21) of the harvesting machine (10),
**characterized in**
**that** a cutting device (40) is arranged below the conveying device (14), which comprises a hub body (42) which can be driven about an axis (A) extending horizontally and transversely to the direction of travel (F) of the harvesting machine (10) and on which at least one blade (K) is provided, wherein, when the hub body (32) is rotated about the horizontal axis (A), the blade (K) can be brought into contact from below with a central region of a cabbage vegetable (1) resting on the conveyor device (14), so that the stalk (2) of the cabbage vegetable (1) and/or adjacent regions thereof are thereby cut out of the cabbage vegetable (1).

2. Harvesting machine (10) according to claim 1, **characterized in that** the conveyor device (14) comprises a pair of main augers (16) which are rotatably mounted and can be driven about their longitudinal axis, the main augers (16) being arranged at least in the receiving segment (18) and each having a front free end (17) that extends in the direction of travel (F) of the harvesting machine (10), and **in that** the conveyor device (14) comprises a pair of rotatably mounted additional augers (22) which are arranged in the receiving segment (18) of the conveyor device (14) in each case parallel to the main augers (16) and can be driven about their longitudinal axis.

3. Harvesting machine (10) according to claim 1 or 2, **characterized in that** the main augers (16) and the additional augers (22) are mounted together on a guide element (24) which is articulated to a front end of the frame device (12) and is pivotable about an axis of rotation (D) which extends horizontally and transversely to the direction of travel (F) of the harvesting machine (10), so that an inclination of the augers (16; 22) relative to an agricultural area(N) located thereunder can be jointly adjusted.

4. Harvesting machine (10) according to one of the preceding claims, **characterized in that** a plurality of radially projecting arm elements (44) are provided on the hub body (42), a blade (K) being attached to each of the free ends (45) of these arm elements (44), respectively, preferably **in that** a blade (K) is adjustably screwed to a free end (45) of the arm element (44) and thus a distance of the blade (K) from the conveyor device (14) can be changed, further preferably **in that** a blade (K) can be exchanged if necessary, further preferably **in that** a ring element (46) is attached to an outer circumferential surface of the hub body (42), on the circumference of which ring element (46) the arm elements (44) are fastened uniformly spaced apart from one another, further preferably that the arm elements (44) are each angled along their longitudinal extension in the region of their free ends (45) in the direction of rotation (R) in which the hub body (42) is driven rotatably about the horizontal axis (A).

5. Harvesting machine (10) according to claim 4, **characterized in that** a first ring member (47) and a second ring member (48) are mounted side by side on an outer circumferential surface of the hub body (42), wherein the plurality of arm elements (44) are assigned to two groups of arm elements (44), namely a first group (I) and a second group (II) of arm elements (44), wherein the arm elements (44) of the first group (I) are attached along the circumference of the first ring element (47) and the arm elements (44) of the second group (II) are attached along the circumference of the second ring element (48), respectively, the arm elements (44) of the first group (I) and the second group (II) being arranged offset with respect to each other in the circumferential direction.

6. Harvesting machine (10) according to claim 5, **characterized in that** the arm elements (44) of the first group (I) and of the second group (II) are each cranked in the region of their free ends (45) in the direction of the respective other group

7. Harvesting machine (10) according to claim 5 or 6, **characterized in that** at least one of the ring elements (47, 48) is displaceably mounted along the horizontal axis (A) on the hub body (42) in such a way that a distance between the two ring elements (47, 48) relative to one another along the horizontal axis (A) can be variably adjusted and thus a resulting working width (W₁ , W₂) with which the blades (K) of the arm elements (44) of the first group (I) and the second group (II) of arm elements (44) act on a cabbage vegetable (1) resting on the conveyor device (14) is variable, wherein the inner circumferential surface of the displaceable ring element (47, 48) contacts the outer circumferential surface of the hub body (42) at least at one point with positive locking and is thereby connected to the hub body (42) in a rotationally fixed manner.

8. Harvesting machine (10) according to one of the preceding claims, comprising a motor (M), **characterized in that** the hub body (42) is operatively connected to the motor (M) which is attached to the frame device (12), wherein the motor (M) can be adjusted on the frame device (12) in the vertical direction and thus a distance of the motor (M) and of the hub body (42) operatively connected thereto and of the arm element or arm elements (44) attached thereto relative to the conveyor device (14) is adjustable.

9. Harvesting machine (10) according to one of the preceding claims, **characterized in that** a cutting element (30) is arranged below the conveying device (14) and - viewed in the conveying direction (15) - at the beginning of the conveying segment (20), which cutting element (30) acts on a cabbage vegetable (1) resting on the conveying device (14) in such a way that the stalk (2) of the cabbage vegetable (1) is thereby at least partially cut off transversely to its axis and/or soiling adhering to the cabbage vegetable (1) is removed, preferably **in that** - viewed in the conveying direction (15) - behind or downstream of the cutting element (30), at least two offset circular saws (34) are provided, which engage obliquely from below into the gap between the two main augers (16) and are arranged in their mutual oblique position in such a way that they saw out a wedge-shaped part, together with the stalk (2), from a cabbage vegetable (1) which rests from above on the conveying device (14) and its two main augers (16).

10. Harvesting machine (10) for cabbage vegetables (1), comprising
a frame device (12),
a conveyor device (14) provided on the frame device (12) and extending in the travelling direction (F) of the harvesting device (10), wherein the conveyor device (14) has a receiving segment (18) for receiving cabbage vegetables (1) from an agricultural area (N) and a conveyor segment (20) for transporting the received cabbage vegetables (1) in a conveying direction (15) to a rear area (21) of the harvesting device (10), wherein the conveyor device (14) has main augers (16) which run parallel to one another in the conveyor segment (20),
a cutting element (30) arranged below the conveying device (14), which acts on a cabbage vegetable (1) resting on the conveying device (14), and at least two offset circular saws (34), which engage obliquely from below in the gap between the two main augers (16) and are arranged in their mutually inclined position in such a way that they saw out a wedge-shaped part, together with the stalk (2), from a cabbage vegetable (1) which rests from above on the conveyor device (14) and its two main augers (16),
**characterized in**
**that** the cutting element (30) - viewed in the conveying direction (15) - is arranged at the beginning of the conveying segment (20) and in front of or upstream of the two offset circular saws (34) engaging obliquely from below in the gap between the two main augers (16) and thereby acts on a cabbage vegetable (1) resting on the conveyor device (14) in such a way that the stalk (2) of the cabbage vegetable (1) is thereby at least partially cut off transversely to its axis and/or soiling adhering to the cabbage vegetable (1) is removed.

11. Harvesting machine (10) according to claim 10, **characterized in that** the two offset circular saws (34) are arranged in a central region of the conveyor segment (20).

12. Harvesting machine (10) according to one of claims 9 to 11, **characterized in that** the cutting element (30) comprises a circular saw (31) which is rotatably driven about an axis (A₃₁), wherein the axis (A₃₁) extends perpendicularly to the longitudinal extension of the main augers (16) and to the conveying direction (15), preferably **in that** the circular saw (31) is arranged with its axis (A₃₁) below a main auger (16) and has a diameter with which the circular saw (31) bridges the distance to the respective other opposite main auger (16).

13. Harvesting machine (10) according to one of the preceding claims, **characterized in that** at least one cleaning device (51) is provided on at least one side of the conveyor device (14) and comprises a hub (52) which is driven about a vertically extending axis and has at least one flexible wiper element (53), wherein, when the hub (52) is driven about its axis, the flexible wiper element (53) can be brought into contact with the conveyor device (14) and the cabbage vegetables (1) resting thereon, preferably **in that** the cleaning device (51) - viewed in the direction of travel (F) of the harvesting machine (10) - is arranged behind the receiving segment (18) of the conveying device (14) and laterally adjacent to the conveying segment (20), further preferably **in that** the cleaning device (51) - viewed in the direction of travel (F) of the harvesting machine (10) - is arranged at the beginning of the conveying segment (20), further preferably **in that** at least one cleaning device (51) is provided on both sides of the conveying device (14).

14. Method for harvesting cabbage vegetables (1), in which the cabbage vegetables (1) are pulled out of an agricultural area (N) and then transported on a conveyor device (14) moving in a conveying direction (15), wherein a cutting operation is carried out on a cabbage vegetable (1) when it is located on the conveyor device (14) at at least two different points along the conveying direction (15) in order to cut the stalk (2) at least partially out of the cabbage vegetable (1) and/or to remove soiling adhering to the cabbage vegetable (1),
**characterized in that**
different cutting operations are carried out successively at three different points along the conveying direction (15) on the cabbage vegetables (1) which are transported on the conveying device (14), namely
(i) a first cutting operation in which the stalk (2) of the cabbage (1) is at least partially cut off transversely to its axis,
(ii) a second cutting operation in which a wedge-shaped part is sawn out of the cabbage vegetable (1) from below, and
(iii) a third cutting process in which further parts of the cabbage (1) are cut out from below with a blade being straight and arranged horizontally.

15. Method according to claim 14, **characterized in that** the method is carried out with a Harvesting machine (10) according to one of claims 1 to 13.

## Revendications

1. Machine de récolte (10) pour des légumes à choux (1), comprenant
un dispositif de châssis (12),
un convoyeur (14) prévu sur le dispositif de châssis (12) et s'étendant dans la direction de déplacement (F) de la machine de récolte (10), le convoyeur (14) comportant un segment de ramassage (18) pour ramasser des légumes à choux (1) provenant d'une surface agricole utile (N) et un segment de transport (20) pour transporter les légumes à choux (1) ramassés dans une direction de convoyage (15) vers une zone arrière (21) de la machine de récolte (10),
**caractérisé en ce**
**qu'**un dispositif de coupe (40) est disposé en dessous du convoyeur (14), lequel comprend un corps de moyeu (42) pouvant être entraîné autour d'un axe (A) s'étendant horizontalement et transversalement au sens de déplacement (F) de la machine de récolte (10), sur lequel est prévue au moins une lame (K), dans lequel, lors d'une rotation du corps de moyeu (32) autour de l'axe horizontal (A), la lame (K) peut être amenée en contact par le bas avec une zone centrale d'un légume à choux (1) reposant sur le convoyeur (14), de sorte que le trognon (2) du légume à choux (1) et/ou des zones adjacentes de celui-ci sont ainsi découpés dans le légume à choux (1).

2. Machine de récolte (10) selon la revendication 1, **caractérisée en ce que** le convoyeur (14) comprend une paire de vis transporteuses principales (16) qui sont montées rotatives et peuvent être entraînées autour de leur axe longitudinal, les vis transporteuses principales (16) étant disposées au moins dans le segment de réception (18) et y présentant chacune une extrémité libre avant (17), qui s'étend dans la direction de déplacement (F) de la machine de récolte (10), et **en ce que** le convoyeur (14) comprend une paire de vis transporteuses supplémentaires (22) logées de manière rotative, qui sont disposées dans le segment de réception (18) du convoyeur (14) respectivement parallèlement aux vis transporteuses principales (16) et peuvent être entraînées autour de leur axe longitudinal.

3. Machine de récolte (10) selon la revendication 1 ou 2, **caractérisée en ce que** les vis transporteuses principales (16) et les vis transporteuses supplémentaires (22) sont montées ensemble sur un élément de guidage (24) qui est monté de manière articulée sur une extrémité avant du dispositif de châssis (12) et qui peut pivoter autour d'un axe de rotation (D) qui s'étend horizontalement et transversalement à la direction de déplacement (F) de la machine de récolte (10), de sorte qu'une inclinaison des vis (16 ; 22) par rapport à une surface utile agricole (N) se trouvant en dessous peut ainsi être réglée conjointement.

4. Machine de récolte (10) selon l'une des revendications précédentes, **caractérisée en ce qu'**une pluralité d'éléments de bras (44) faisant saillie radialement sont prévus sur le corps de moyeu (42), une lame (K) étant montée sur chacune des extrémités libres (45) de ces éléments de bras (44), de préférence **en ce qu'**une lame (K) est vissée de manière réglable sur une extrémité libre (45) de l'élément de bras (44) et qu'ainsi une distance de la lame (K) par rapport au convoyeur (14) est variable, de préférence encore **en ce qu'**une lame (K) peut être remplacée en cas de besoin, de préférence encore **en ce qu'**un élément annulaire (46) est monté sur une surface périphérique extérieure du corps de moyeu (42), sur la périphérie duquel les éléments de bras (44) sont fixés à une distance régulière les uns des autres, de préférence encore **en ce que** les éléments de bras (44) sont respectivement coudés le long de leur extension longitudinale dans la zone de leurs extrémités libres (45) dans la direction de rotation (R) dans laquelle le corps de moyeu (42) est entraîné en rotation autour de l'axe horizontal (A).

5. Machine de récolte (10) selon la revendication 4, **caractérisée en ce qu'**un premier élément annulaire (47) et un deuxième élément annulaire (48) sont montés côte à côte sur une surface périphérique extérieure du corps de moyeu (42), la pluralité d'éléments de bras (44) étant attribuée à deux groupes d'éléments de bras (44), à savoir un premier groupe (I) et un deuxième groupe (II) d'éléments de bras (44), les éléments de bras (44) du premier groupe (I) étant fixés le long de la périphérie du premier élément annulaire (47) et les éléments de bras (44) du deuxième groupe (II) étant fixés le long de la périphérie du deuxième élément annulaire (48), respectivement, les éléments de bras (44) du premier groupe (I) et du deuxième groupe (II) étant décalés les uns par rapport aux autres dans la direction périphérique, respectivement.

6. Machine de récolte (10) selon la revendication 5, **caractérisée en ce que** les éléments de bras (44) du premier groupe (I) et du deuxième groupe (II) sont réalisés respectivement coudés dans la zone de leurs extrémités libres (45) en direction de l'autre groupe.

7. Machine de récolte (10) selon la revendication 5 ou 6, **caractérisée en ce qu'**au moins l'un des éléments annulaires (47, 48) est monté coulissant le long de l'axe horizontal (A) sur le corps de moyeu (42), de telle sorte qu'il est ainsi possible de régler de manière variable une distance des deux éléments annulaires (47, 48) l'un par rapport à l'autre le long de l'axe horizontal (A) et donc une distance de travail résultante (W₁ , W₂) est variable avec laquelle les lames (K) des éléments de bras (44) du premier groupe (I) et du deuxième groupe (II) d'éléments de bras (44) agissent sur un chou-légume (1) reposant sur le convoyeur (14), l'élément annulaire mobile (47, 48) étant en contact par complémentarité de forme sur sa surface périphérique intérieure en au moins un endroit avec la surface périphérique extérieure du corps de moyeu (42) et étant ainsi relié de manière solidaire en rotation au corps de moyeu (42).

8. Machine de récolte (10) selon l'une quelconque des revendications précédentes, comprenant un motor (M), **caractérisée en ce que** le corps de moyeu (42) est relié fonctionnellement au moteur (M) qui est monté sur le dispositif de châssis (12), le moteur (M) étant fixé au dispositif de châssis (12) de manière réglable dans la direction verticale et une distance du moteur (M) et du corps de moyeu (42) relié fonctionnellement à celui-ci et de l'élément ou des éléments de bras (44) montés sur celui-ci étant ainsi réglable par rapport au convoyeur (14).

9. Machine de récolte (10) selon l'une des revendications précédentes, **caractérisée en ce qu'**un élément de coupe (30) est disposé en dessous du convoyeur (14) et - vu dans la direction de convoyage (15) - au début du segment de transport (20), lequel agit sur un légume à choux (1) reposant sur le convoyeur (14), de telle sorte que le trognon (2) du légume à choux (1) soit au moins partiellement coupé transversalement à son axe et/ou que les salissures adhérant au légume à choux (1) soient éliminées, de préférence **en ce que** - vu dans le sens de convoyage (15) - derrière ou en aval de l'élément de coupe (2), il est prévu au moins deux scies circulaires (34) disposées en quinconce, qui s'engagent obliquement par le bas dans la fente entre les deux vis transporteuses principales (16) et qui sont disposées dans leur position oblique mutuelle de telle sorte qu'elles retirent à la scie une partie en forme de coin d'un légume à choux (1) qui repose par le haut sur le convoyeur (14) et ses deux vis transporteuses principales (16), y compris le trognon (2).

10. Machine de récolte (10) pour les légumes à choux (1), comprenant
un dispositif de châssis (12),
un convoyeur (14) prévu sur le dispositif de châssis (12) et s'étendant dans la direction de déplacement (F) de la machine de récolte (10), le convoyeur (14) comprend un segment de ramassage (18) pour ramasser des choux-légumes (1) dans une surface agricole utile (N) et un segment de transport (20) pour transporter les choux-légumes ramassés (1) dans une direction de convoyage (15) vers une zone arrière (21) de la machine de récolte (10), le convoyeur (14) comprend des vis transporteuses principales (20) qui s'étendent parallèlement les unes aux autres dans le segment de transport (20),
un élément de coupe (30) disposé en dessous du convoyeur (14), qui agit sur un légume à choux (1) reposant sur le convoyeur (14), et
au moins deux scies circulaires (34) disposées en quinconce, qui s'engagent obliquement par le bas dans la fente entre les deux vis transporteuses principales (16) et qui sont disposées dans leur position oblique mutuelle de telle sorte qu'elles retirent à la scie une partie en forme de coin d'un légume à choux (1) qui repose par le haut sur le convoyeur (14) et ses deux vis transporteuses principales (16), y compris le trognon (2),
**caractérisé en ce**
**que** l'élément de coupe (30) - vu dans la direction de convoyage (15) - se trouve au début du segment de transport (20) et devant ou en amont des deux scies circulaires (34) disposées de manière décalée et s'engageant obliquement par le bas dans la fente entre les deux vis transporteuses principales (16), et agit ainsi sur un légume à choux (1) reposant sur le convoyeur (14) de telle sorte que le trognon (2) du légume à choux (1) est ainsi au moins partiellement coupé transversalement à son axe et/ou que les salissures adhérant au légume à choux (1) sont éliminées.

11. Machine de récolte (10) selon la revendication 10, **caractérisée en ce que** les deux scies circulaires (34) décalées sont disposées dans une zone centrale du segment de transport (20).

12. Machine de récolte (10) selon l'une des revendications 9 à 11, **caractérisée en ce que** l'élément de coupe (30) comprend une scie circulaire (31) entraînée en rotation autour d'un axe (A₃₁), ledit axe (A₃₁) étant perpendiculaire à l'extension longitudinale des vis transporteuses principales (16) et à la direction de convoyage (15), de préférence **en ce que** la scie circulaire (31) est disposée avec son axe (A₃₁ ) en dessous d'une vis transporteuse principale (16) et présente alors un diamètre avec lequel la scie circulaire (31) couvre la distance jusqu'à l'autre vis transporteuse principale (16) opposée.

13. Machine de récolte (10) selon l'une des revendications précédentes, **caractérisée en ce qu'**au moins un dispositif de nettoyage (51) est prévu sur au moins un côté du convoyeur (14), lequel comprend un moyeu (52) entraîné autour d'un axe s'étendant verticalement avec au moins un élément de raclage flexible (53), l'élément de raclage flexible (53) pouvant être amené en contact avec le convoyeur (14) et les légumes à choux (1) reposant sur celui-ci lors de l'entraînement du moyeu (52) autour de son axe, de préférence **en ce que** le dispositif de nettoyage (51) - vu dans le sens de la marche (F) de la machine de récolte (10) - est disposé derrière le segment de réception (18) du convoyeur (14) et latéralement adjacent au segment de transport (20), de préférence encore **en ce que** le dispositif de nettoyage (51) - vu dans le sens de la marche (F) de la machine de récolte (10) - est disposé au début du segment de transport (20), de préférence encore **en ce qu'**au moins un dispositif de nettoyage (51) est prévu sur chacun des deux côtés du convoyeur (14).

14. Procédé de récolte des légumes à choux (1), dans lequel les légumes à choux (1) sont extraits d'une surface agricole utile (N) et sont ensuite transportés sur un convoyeur (14) se déplaçant dans une direction de convoyage (15), dans lequel sur un légume à choux (1), lorsqu'il se trouve sur le convoyeur (14), une opération de coupe est effectuée en au moins deux endroits différents le long de la direction de convoyage (15), afin de découper au moins partiellement le trognon (2) du légume à choux (1) et/ou d'éliminer des salissures adhérant au légume à choux (1),
**caractérisé en ce**
**que** des opérations de coupe différentes sont effectuées successivement en trois endroits différents le long de la direction de convoyage (15) sur le légume à choux (1) transporté sur le convoyeur (14), à savoir
(i) une première opération de coupe, au cours de laquelle le trognon (2) du légume à choux (1) est coupé au moins partiellement transversalement à son axe,
(ii) une deuxième opération de coupe, au cours de laquelle une partie en forme de coin est sciée du légume à choux (1) par le bas, et
(iii) une troisième opération de coupe, au cours de laquelle d'autres parties des légumes à choux (1) sont découpées par le bas à l'aide d'une lame droite et disposée horizontalement.

15. Procédé selon la revendication 14, **caractérisé en ce que** le procédé est mis en oeuvre avec une machine de récolte (10) selon l'une des revendications 1 à 13.
